# EUROPEAN PATENT SPECIFICATION

(11) **EP 4 352 727 B1**
(45) Date of publication and mention of the grant of the patent: **11.02.2026**
(21) Application number: 21762943.5
(22) Date of filing: 09.08.2021
(51) Int. Cl.: G10L 21/0356, G10L 21/10, G10L 25/57, G10L 25/30, G06F 40/284

(54) **SYSTEMS AND METHODS FOR ASSISTED TRANSLATION AND LIP MATCHING FOR VOICE DUBBING**
SYSTEME UND VERFAHREN FÜR UNTERSTÜTZTE ÜBERSETZUNG UND LIPPENABGLEICH FÜR SPRACHNACHSPIELUNG
SYSTÈMES ET PROCÉDÉS DE TRADUCTION ASSISTÉE ET DE MISE EN CORRESPONDANCE DE LÈVRES POUR DOUBLAGE DE LA VOIX

(43) Date of publication of application: 17.04.2024
(73) Proprietor: Google LLC, Mountain View, CA 94043 (US)
(72) Inventor: MCCARTNEY, Paul, Mountain View, CA 94043 (US)
(74) Representative: Collingwood-Pierce, Alexandra Isobel Seymour
(86) International application number: PCT/US2021/045195
(87) International publication number: WO 2023/018405

(56) References cited:
- US-A1- 2020 042 601
- US-B2- 9 922 665

## Description

### BACKGROUND

Voice dubbing is the task of translating and replacing the speech of video (e.g., movies, TV shows) from an original language into a target language. Professional voice dubbing is currently a labor-intensive and expensive task, due to the complexities of matching the duration of the translation to the original speech (referred to herein as "duration matching"), and matching the words of the translation to the lip motions, facial expressions, gestures, and body language of the original video (generically referred to herein as "lip matching"). Generally, this process requires at least: (1) a translator to create the translated dialogue; (2) an adapter who works on duration matching, avoiding mismatches between the translation and the various gestures and other sounds in the video, and who may suggest other changes to conform the translation to local idioms; (3) a voice actor who performs the translation and who may make further adjustments in order to time certain syllables to correspond to the on-screen action and lip positions of the speaker; and (4) an audio editor who may further fine-tune the timing of the newly recorded voice dubbing to further improve lip matching. In many cases, duration matching and lip matching pose competing demands that complicate and prolong this process. It may therefore be desirable to reduce the costs and time associated with voice dubbing using systems and methods that automate or assist with some or all of these steps.

US 9 922 665 B2 describes systems and methods for generating a visually consistent alternative audio for redubbing visual speech using a processor configured to sample a dynamic viseme sequence corresponding to a given utterance by a speaker in a video, identify a plurality of phonemes corresponding to the dynamic viseme sequence, construct a graph of the plurality of phonemes that synchronize with a sequence of lip movements of a mouth of the speaker in the dynamic viseme sequence, use the graph to generate an alternative phrase that substantially matches the sequence of lip movements of the mouth of the speaker in the video.

### BRIEF SUMMARY

The present technology concerns systems and methods for generating candidate translations for use in creating synthetic or human-acted voice dubbings, aiding human translators in generating translations that match the corresponding video, automatically grading (based on analysis of the corresponding video) how well a candidate translation matches the corresponding video, suggesting modifications to the speed and/or timing of the translated text to improve the grading of a candidate translation, and suggesting modifications to the voice dubbing and/or video to improve the grading of a candidate translation. In that regard, the present technology may be used to fully automate the process of generating lip-matched translations and associated voice dubbings (including synthesizing speech output from a text input), or as an aid for human-in-the-loop ("HITL") processes that may reduce (or eliminate) the amount of time and effort spent by translators, adapters, voice actors, and/or audio editors to generate voice dubbings. In this way, the present technology may provide a less expensive and less resource-intensive approach to voice dubbing that may generate voice-dubbed videos in a quicker, and/or more computationally-efficient, manner.

In one aspect, the disclosure describes a computer-implemented method comprising: (i) generating, using one or more processors of a processing system, a synthesized audio clip based on a sequence of text using a text-to-speech synthesizer, the synthesized audio clip comprising synthesized speech corresponding to the sequence of text; and (ii) for each given video frame of a video clip comprising a plurality of video frames: (a) processing the video clip, using the one or more processors, to obtain a given image based on the given video frame; (b) processing the synthesized audio clip, using the one or more processors, to obtain a given segment of audio data corresponding to the given video frame; (c) processing the given segment of audio data, using the one or more processors, to generate a given audio spectrogram image; and (d) generating, using the one or more processors, a frame-level speech-mouth consistency score for the given video frame based on the given image and the given audio spectrogram image using a speech-mouth consistency model. In some aspects, the method further comprises generating, using the one or more processors, an overall score based at least in part on the generated frame-level speech-mouth consistency score corresponding to each given video frame of the plurality of video frames. In some aspects, the method further comprises: identifying, using the one or more processors, a set of the generated frame-level speech-mouth consistency scores corresponding to a given word of the sequence of text; and generating, using the one or more processors, a word-level speech-mouth consistency score for the given word based on the identified set of the generated frame-level speech-mouth consistency scores. In some aspects, the method further comprises generating, using the one or more processors, an overall score based at least in part on the generated word-level speech-mouth consistency score corresponding to each given word of the sequence of text. In some aspects, the method further comprises generating, using the one or more processors, a duration score based on a comparison of a length of the synthesized audio clip and a length of the video clip. In some aspects, the method further comprises: processing, using the one or more processors, the video clip to identify a set of one or more mouth-shapes-of-interest from a speaker visible in the video clip; and for each given mouth-shape-of-interest of the set of one or more mouth-shapes-of-interest, correlating, using the one or more processors, the given mouth-shape-of-interest to one or more video frames of the plurality of video frames. In some aspects, the video clip further comprises original audio data, and the method further comprises: processing, using the one or more processors, the original audio data to identify one or more words or phonemes being spoken by a speaker recorded in the original audio data; generating, using the one or more processors, a set of one or more mouth-shapes-of-interest based on the identified one or more words or phonemes; and, for each given mouth-shape-of-interest of the set of one or more mouth-shapes-of-interest, correlating, using the one or more processors, the given mouth-shape-of-interest to one or more video frames of the plurality of video frames. In some aspects, the method further comprises: processing, using the one or more processors, a transcript of the video clip to identify one or more words or phonemes; generating, using the one or more processors, a set of one or more mouth-shapes-of-interest based on the identified one or more words or phonemes; and for each given mouth-shape-of-interest of the set of one or more mouth-shapes-of-interest, correlating, using the one or more processors, the given mouth-shape-of-interest to one or more video frames of the plurality of video frames. In some aspects, the method further comprises: processing, using the one or more processors, the synthesized audio clip to identify one or more words or phonemes being spoken in the synthesized speech of the synthesized audio clip; generating, using the one or more processors, a set of one or more mouth-shapes-of-interest based on the identified one or more words or phonemes; and for each given mouth-shape-of-interest of the set of one or more mouth-shapes-of-interest, correlating, using the one or more processors, the given mouth-shape-of-interest to one or more video frames of the plurality of video frames. In some aspects, the method further comprises: processing, using the one or more processors, the sequence of text to identify one or more words or phonemes; generating, using the one or more processors, a set of one or more mouth-shapes-of-interest based on the identified one or more words or phonemes; and for each given mouth-shape-of-interest of the set of one or more mouth-shapes-of-interest, correlating, using the one or more processors, the given mouth-shape-of-interest to one or more video frames of the plurality of video frames. In some aspects, the method further comprises: selecting the synthesized audio clip, using the one or more processors, based on the overall score satisfying a predetermined criteria; combining, using the one or more processors, the synthesized audio clip with the video clip to generate a modified video; and outputting, using the one or more processors, the modified video.

In another aspect, the disclosure describes a non-transitory computer readable medium comprising instructions which, when executed, cause one or more processors to perform the operations set forth in the preceding paragraph.

In another aspect, the disclosure describes a system comprising: (1) a memory; and (2) one or more processors coupled to the memory and configured to: (i) using a text-to-speech synthesizer, generate a synthesized audio clip based on a sequence of text, the synthesized audio clip comprising synthesized speech corresponding to the sequence of text; and (ii) for each given video frame of a video clip comprising a plurality of video frames: (a) process the video clip to obtain a given image based on the given video frame; (b) process the synthesized audio clip to obtain a given segment of audio data corresponding to the given video frame; (c) process the given segment of audio data to generate a given audio spectrogram image; and (d) using a speech-mouth consistency model, generate a frame-level speech-mouth consistency score for the given video frame based on the given image and the given audio spectrogram image. In some aspects, the one or more processors are further configured to generate an overall score based at least in part on the generated frame-level speech-mouth consistency score corresponding to each given video frame of the plurality of video frames. In some aspects, the one or more processors are further configured to: identify a set of the generated frame-level speech-mouth consistency scores corresponding to a given word of the sequence of text; and generate a word-level speech-mouth consistency score for the given word based on the identified set of the generated frame-level speech-mouth consistency scores. In some aspects, the one or more processors are further configured to generate an overall score based at least in part on the generated word-level speech-mouth consistency score corresponding to each given word of the sequence of text. In some aspects, the one or more processors are further configured to generate a duration score based on a comparison of a length of the synthesized audio clip and a length of the video clip. In some aspects, the one or more processors are further configured to: process the video clip to identify a set of one or more mouth-shapes-of-interest from a speaker visible in the video clip; and for each given mouth-shape-of-interest of the set of one or more mouth-shapes-of-interest, correlate the given mouth-shape-of-interest to one or more video frames of the plurality of video frames. In some aspects, the video clip further comprises original audio data, and wherein the one or more processors are further configured to: process the original audio data to identify one or more words or phonemes being spoken by a speaker recorded in the original audio data; generate a set of one or more mouth-shapes-of-interest based on the identified one or more words or phonemes; and for each given mouth-shape-of-interest of the set of one or more mouth-shapes-of-interest, correlate the given mouth-shape-of-interest to one or more video frames of the plurality of video frames. In some aspects, the one or more processors are further configured to: process a transcript of the video clip to identify one or more words or phonemes; generate a set of one or more mouth-shapes-of-interest based on the identified one or more words or phonemes; and for each given mouth-shape-of-interest of the set of one or more mouth-shapes-of-interest, correlate the given mouth-shape-of-interest to one or more video frames of the plurality of video frames. In some aspects, the one or more processors are further configured to: process the synthesized audio clip to identify one or more words or phonemes being spoken in the synthesized speech of the synthesized audio clip; generate a set of one or more mouth-shapes-of-interest based on the identified one or more words or phonemes; and for each given mouth-shape-of-interest of the set of one or more mouth-shapes-of-interest, correlate the given mouth-shape-of-interest to one or more video frames of the plurality of video frames. In some aspects, the one or more processors are further configured to: process the sequence of text to identify one or more words or phonemes; generate a set of one or more mouth-shapes-of-interest based on the identified one or more words or phonemes; and for each given mouth-shape-of-interest of the set of one or more mouth-shapes-of-interest, correlate the given mouth-shape-of-interest to one or more video frames of the plurality of video frames. In some aspects, the one or more processors are further configured to: select the synthesized audio clip based on the overall score satisfying a predetermined criteria; combine the synthesized audio clip with the video clip to generate a modified video; and output the modified video.

### BRIEF DESCRIPTION OF THE DRAWINGS

FIG. 1 is a functional diagram of an example system in accordance with aspects of the disclosure.
FIG. 2 is a functional diagram of an example system in accordance with aspects of the disclosure.
FIG. 3 shows an example architecture for a speech-mouth consistency model in accordance with aspects of the disclosure.
FIGS. 4A and 4B depict an exemplary method for automated generation of training examples for use in training a speech-mouth consistency model, in accordance with aspects of the disclosure.
FIG. 5 depicts an exemplary method for iteratively training a speech-mouth consistency model, in accordance with aspects of the disclosure.
FIG. 6 depicts an exemplary method for training a speech-mouth consistency model using preset criteria for each negative training example, in accordance with aspects of the disclosure.
FIG. 7 depicts an exemplary layout for displaying frame-level scores from a speech-mouth consistency model for selected frames of a video, in accordance with aspects of the disclosure.
FIG. 8 builds from the exemplary layout of FIG. 7 and depicts an exemplary layout for representing a mid-sentence pause in the original video, in accordance with aspects of the disclosure.
FIG. 9 builds from the exemplary layout of FIG. 7 and depicts an exemplary layout for additionally representing that the candidate translation is too long to match the original video, in accordance with aspects of the disclosure.
FIG. 10 builds from the exemplary layout of FIG. 7 and depicts an exemplary layout for additionally representing a period during which the original video does not afford a clear view of the speaker or the speaker's mouth, in accordance with aspects of the disclosure.
FIG. 11 builds from the exemplary layout of FIG. 7 and depicts an exemplary layout for additionally displaying a candidate translation, in accordance with aspects of the disclosure.
FIG. 12 builds from the exemplary layout of FIG. 11 and depicts an exemplary layout for additionally displaying identified mouth shapes from the original video, in accordance with aspects of the disclosure.
FIG. 13 builds from the exemplary layout of FIG. 12 and depicts an exemplary layout for additionally displaying identified mouth shapes from the candidate translation, in accordance with aspects of the disclosure.
FIG. 14 depicts an exemplary layout in which the exemplary layout of FIG. 13 is rearranged and modified to display aggregated word-level scores, in accordance with aspects of the disclosure.
FIG. 15 depicts an exemplary layout for presenting a sentence to be translated, a set of automatically generated translations and associated scores, and a text box for accepting a translator's candidate translation, in accordance with aspects of the disclosure.
FIG. 16 builds from the exemplary layout of FIG. 15 and depicts an exemplary layout that additionally includes a prior translation history, in accordance with aspects of the disclosure.
FIGS. 17A and 17B depict exemplary layouts illustrating how autocomplete may be employed within the exemplary layout of FIG. 15, in accordance with aspects of the disclosure.
FIG. 18 builds from the exemplary layout of FIG. 15 and depicts an exemplary layout that further includes an additional automatically generated translation based on the content of the text entry box as well as a graphical representation of the translator's candidate translation, in accordance with aspects of the disclosure.
FIG. 19 builds from the exemplary layout of FIG. 18 and depicts an exemplary layout that further includes an additional automatically generated translation option that incorporates audio or video modifications, in accordance with aspects of the disclosure.
FIG. 20 depicts an exemplary method for generating frame-level speech mouth consistency scores based on a sequence of text and a video clip, in accordance with aspects of the disclosure.

### DETAILED DESCRIPTION

The present technology will now be described with respect to the following exemplary systems and methods.

### Example Systems

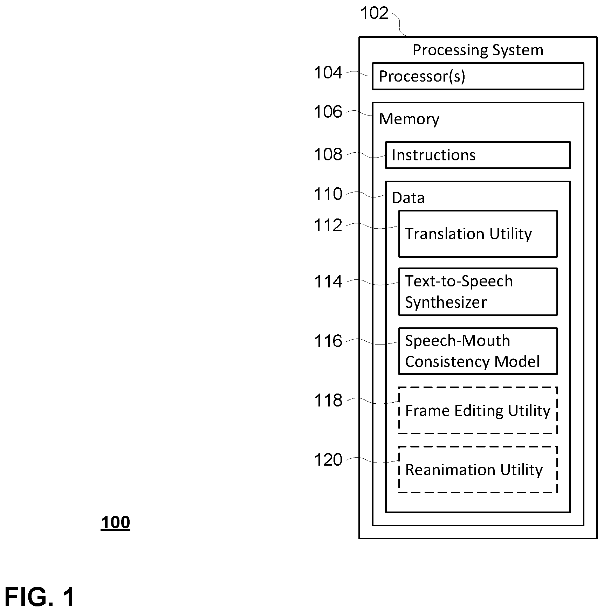

FIG. 1 shows a high-level system diagram 100 of an exemplary processing system 102 for performing the methods described herein. The processing system 102 may include one or more processors 104 and memory 106 storing instructions 108 and data 110. In the exemplary processing system 102 of FIG. 1, data 110 includes the translation utility 112, text-to-speech synthesizer 114, and speech-mouth consistency model 116 described further below. In addition, data 110 may optionally include a frame editing utility 118 for adding or removing frames from a selected video sample, and/or a reanimation utility 120 for altering a speaker's lips, face, and/or body to better match a candidate translation, as also discussed below. These different utilities 112, 114, 116, 118, and 120 may be considered as modules, which modules may be implemented together or separately, as appropriate.

In the example of FIG. 1, it is assumed that the text-to-speech synthesizer 114 will be configured to generate not only a synthesized audio clip comprising synthesized speech corresponding to input text (e.g., a word, sentence, sequence of text), but also an audio spectrogram of the synthesized audio clip, and data regarding the timing (e.g., start and end time, and/or duration) of each phoneme in the synthesized speech. However, in some aspects of the technology, the processing system 102 may employ a text-to-speech synthesizer that is only configured to generate synthesized speech corresponding to the input text, or that is configured to generate synthesized speech and timing data corresponding to the input text (but not the audio spectrogram). In such cases, the processing system 102 may be configured to provide the resulting synthesized audio clip to one or more additional utilities (not shown in FIG. 1) which are configured to generate an audio spectrogram of the synthesized speech, and/or generate data regarding the timing (e.g., start and end time, and/or duration) of each phoneme in the synthesized speech.

Further, in some aspects of the technology, the text-to-speech synthesizer 114 may be configured not only to generate synthesized speech corresponding to the input text, but also to allow a user or the processing system to specify one or more aspects of how the input text will be synthesized. For example, in some aspects of the technology, the text-to-speech synthesizer 114 may be configured to allow a user or the processing system to specify: (i) that a pause of a certain duration should be inserted between selected words or phonemes from the input text; (ii) what speech rate should be used when synthesizing the input text, or a specific portion of the input text; and/or (ii) how long the synthesizer should take in pronouncing a particular phoneme or word from the input text.

Processing system 102 may be resident on a single computing device. For example, processing system 102 may be a server, personal computer, or mobile device, and the models and utilities described herein may thus be local to that single computing device. Similarly, processing system 102 may be resident on a cloud computing system or other distributed system, such that one or more of the models and/or utilities described herein are distributed across two or more different physical computing devices. Likewise, in some aspects, one or more of the modules 112, 114, 116, 118 and 120 may be implemented on a computing device, such as a user computing device or personal computer, and other of the modules may be implemented on a server accessible from the computing device.

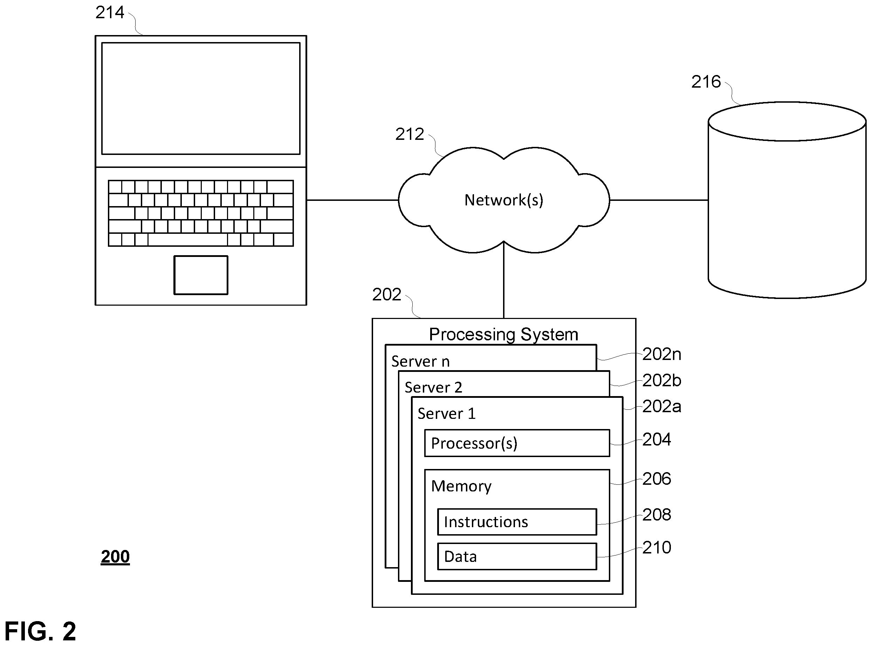

In this regard, FIG. 2 shows an additional high-level system diagram 200 in which an exemplary processing system 202 for performing the methods described herein is shown as a set of *n* servers 202a-202n, each of which includes one or more processors 204 and memory 206 storing instructions 208 and data 210. In addition, in the example of FIG. 2, the processing system 202 is shown in communication with one or more networks 212, through which it may communicate with one or more other computing devices. For example, the one or more networks 212 may allow a user to interact with processing system 202 using a personal computing device 214, which is shown as a laptop computer, but may take any known form including a desktop computer, tablet, smart phone, etc. Likewise, the one or more networks 212 may allow processing system 202 to communicate with one or more remote storages systems such as remote storage system 216. In some aspects of the technology, one or more of the translation utility, text-to-speech synthesizer, speech-mouth consistency model, the optional frame editing utility, and the optional reanimation utility described herein may be stored in memory 210 of one or more of servers 202a-202n. Likewise, in some aspects, one or more of the translation utility, text-to-speech synthesizer, speech-mouth consistency model, the optional frame editing utility, and the optional reanimation utility described herein may be stored in remote storage system 216, such that remote storage system 216 and processing system 202 form a distributed processing system for practicing the methods described below.

The processing systems described herein may be implemented on any type of computing device(s), such as any type of general computing device, server, or set thereof, and may further include other components typically present in general purpose computing devices or servers. Likewise, the memory of such processing systems may be of any non-transitory type capable of storing information accessible by the processor(s) of the processing systems. For instance, the memory may include a non-transitory medium such as a hard-drive, memory card, optical disk, solid-state, tape memory, or the like. Computing devices suitable for the roles described herein may include different combinations of the foregoing, whereby different portions of the instructions and data are stored on different types of media.

In all cases, the computing devices described herein may further include any other components normally used in connection with a computing device such as a user interface subsystem. The user interface subsystem may include one or more user inputs (e.g., a mouse, keyboard, touch screen and/or microphone) and one or more electronic displays (e.g., a monitor having a screen or any other electrical device that is operable to display information). Output devices besides an electronic display, such as speakers, lights, and vibrating, pulsing, or haptic elements, may also be included in the computing devices described herein.

The one or more processors included in each computing device may be any conventional processors, such as commercially available central processing units ("CPUs"), graphics processing units ("GPUs"), tensor processing units ("TPUs"), etc. Alternatively, the one or more processors may be a dedicated device such as an ASIC or other hardware-based processor. Each processor may have multiple cores that are able to operate in parallel. The processor(s), memory, and other elements of a single computing device may be stored within a single physical housing, or may be distributed between two or more housings. Similarly, the memory of a computing device may include a hard drive or other storage media located in a housing different from that of the processor(s), such as in an external database or networked storage device. Accordingly, references to a processor or computing device will be understood to include references to a collection of processors or computing devices or memories that may or may not operate in parallel, as well as one or more servers of a load-balanced server farm or cloud-based system.

The computing devices described herein may store instructions capable of being executed directly (such as machine code) or indirectly (such as scripts) by the processor(s). The computing devices may also store data, which may be retrieved, stored, or modified by one or more processors in accordance with the instructions. Instructions may be stored as computing device code on a computing device-readable medium. In that regard, the terms "instructions" and "programs" may be used interchangeably herein. Instructions may also be stored in object code format for direct processing by the processor(s), or in any other computing device language including scripts or collections of independent source code modules that are interpreted on demand or compiled in advance. By way of example, the programming language may be C#, C++, JAVA or another computer programming language. Similarly, any components of the instructions or programs may be implemented in a computer scripting language, such as JavaScript, PHP, ASP, or any other computer scripting language. Furthermore, any one of these components may be implemented using a combination of computer programming languages and computer scripting languages.

### Example Methods

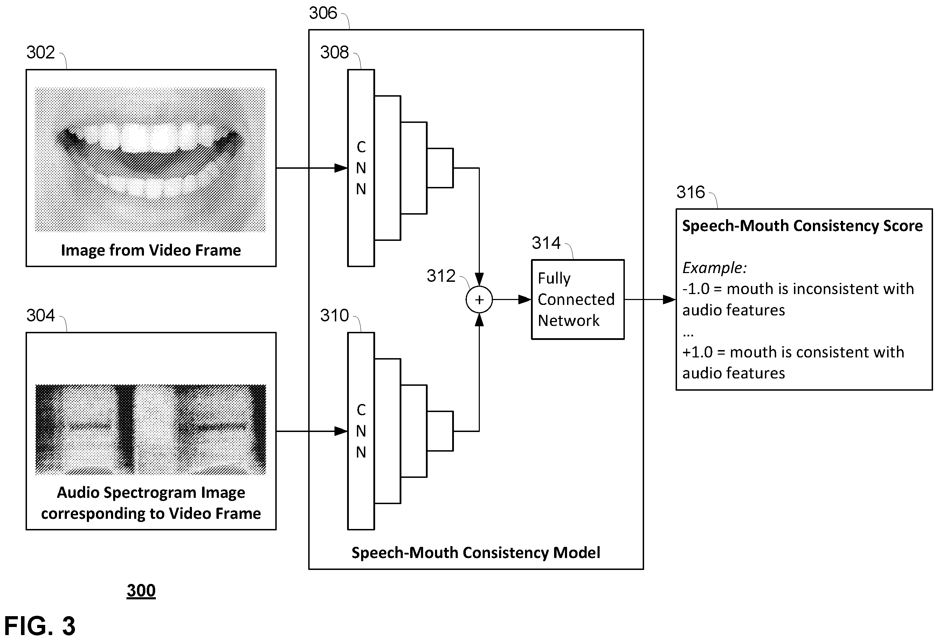

FIG. 3 shows an example architecture 300 for a speech-mouth consistency model 306 in accordance with aspects of the disclosure. In that regard, in the example of FIG. 3, a video clip has been processed to obtain an image 302 of a given video frame of the video clip, and an audio spectrogram image 304 of the audio data in the video clip which corresponds to the given video frame. In this example, the image 302 shows a speaker's mouth cropped from the given video frame. However, in some aspects of the technology, the image 302 may be a larger portion of the given video frame (e.g., showing the entire speaker's face and/or body) or the full frame. In such a case, image 302 may further be pre-labelled to identify the speaker and/or the speaker's face or mouth to aid the speech-mouth consistency model 306 in learning correlations between the audio spectrogram image 304 and how the mouth appears in image 302.

The audio spectrogram image 304 shows a spectrogram for a period of time that corresponds to the given video frame. The audio spectrogram image 304 may represent all frequencies of the audio data corresponding to that period of time, or a subset thereof (e.g., the range of frequencies generally corresponding to human voice). Likewise, in some aspects of the technology, the audio spectrogram image 304 may represent audio data for any suitable period of time corresponding to the given video frame. For example, the audio spectrogram image 304 may represent audio data for some number of milliseconds preceding the display of the given video frame. Likewise, in some aspects, the audio spectrogram image 304 may represent audio data corresponding to some or all of the period of time during which the video frame is to be displayed. For example, for a video with 24 frames per second ("fps") where a new frame is shown every 41.67 ms, the audio spectrogram may represent audio data corresponding to the 41.67 ms that the frame is to be displayed, the first 20 ms that the image is to be displayed, etc. Further, in some aspects, the audio spectrogram image 304 may represent audio data which begins *n* milliseconds before the display of the given video frame to *m* milliseconds after the display of the given video frame (where *n* and *m* may be the same or different). For example, for a 24 fps video, the audio spectrogram may span 20.83 ms before the frame is to be displayed to 20.83 ms after the frame is to be displayed.

Likewise, although the example of FIG. 3 uses an audio spectrogram image, in some aspects of the technology, other data representing the audio corresponding to the given video frame may be used. For example, in some aspects of the technology, the original audio data corresponding to the given video frame may be fed directly to a speech-mouth consistency model. In some aspects, the original audio data may be filtered to isolate various frequencies (e.g., those generally corresponding to human voice) and the filtered audio data may be fed to the speech-mouth consistency model. In some aspects, the original audio data (or a filtered or processed version thereof) may be preprocessed by a learned embedding function to generate a vector, which is then fed to the speech-mouth consistency model. In such cases, the architecture of the speech-mouth consistency model may be different from that shown in the example of FIG. 3 in order to accommodate these different input types.

As shown in FIG. 3, the image 302 and audio spectrogram image 304 are both fed to the speech-mouth consistency model 306. The speech-mouth consistency model 306 may be any suitable type of model configured to grade how consistent the image 302 is with the audio spectrogram image 304 and output a corresponding speech-mouth consistency score. However, in the specific example of FIG. 3, the speech-mouth consistency model 306 comprises two convolutional neural networks, CNN 308 and CNN 310, whose outputs are fed to an aggregator 312, the output of which is then fed to a fully connected network 314. As shown in FIG. 3, image 302 is fed to CNN 308 and the audio spectrogram image 304 is fed to a different CNN 310. CNN 308 and 310 each produce intermediate classifications based on their respective inputs, and those intermediate classifications are then concatenated by aggregator 312. The output of aggregator 312 is fed to a fully connected network 314, which then outputs a final classification in the form of a speech-mouth consistency score 316. The speech-mouth consistency score 316 may be conveyed in any suitable way. For example, as shown in FIG. 3, the speech-mouth consistency model 306 may be configured to assign a value in a range between -1.0 and +1.0, with a score of -1.0 indicating that the speaker's mouth in image 302 is inconsistent with the audio features shown in audio spectrogram 304, and a score of +1.0 indicating that the speaker's mouth in image 302 is consistent with the audio features shown in audio spectrogram 304. In some aspects of the technology, the speech-mouth consistency model 306 may be configured to issue a speech-mouth consistency score 316 in a range between 0 and 1.0, with a score of 0 indicating inconsistency and a score of 1.0 indicating consistency. Likewise, in some aspects, the speech-mouth consistency model 306 may instead be configured to issue a speech-mouth consistency score 316 that is not numerical, such as letter grades (e.g., A, B, C, ... F), or word labels (e.g., consistent, neutral, inconsistent).

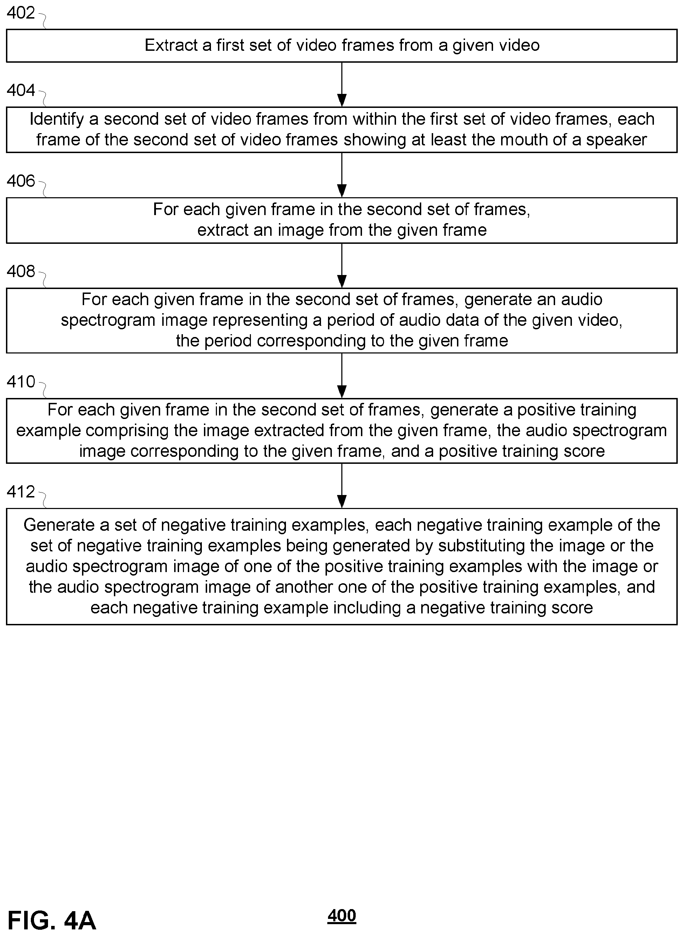

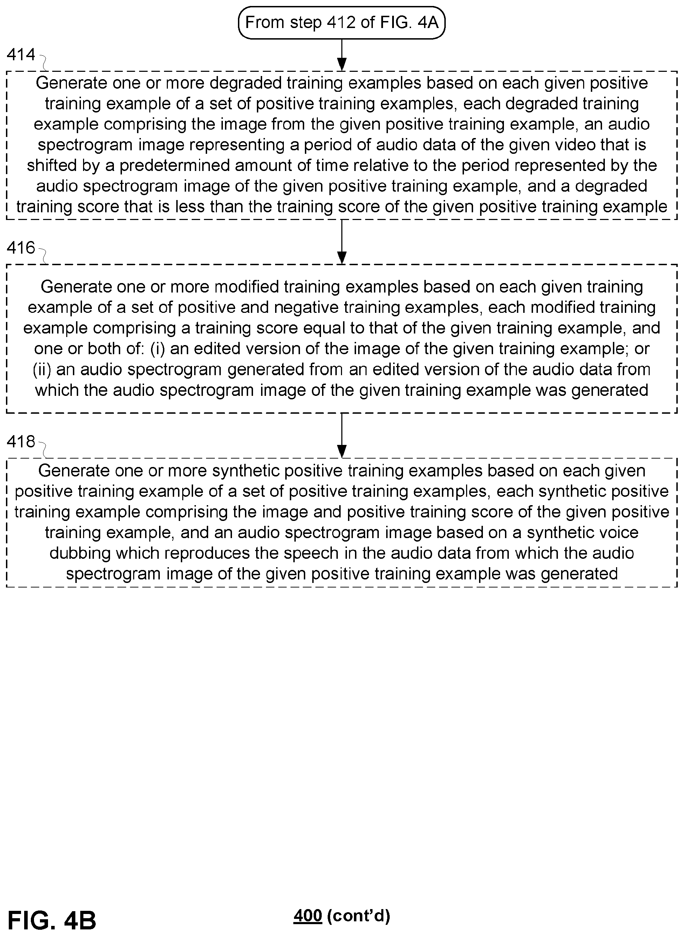

FIGS. 4A and 4B depict an exemplary method 400 for automated generation of training examples for use in training a speech-mouth consistency model, in accordance with aspects of the disclosure. In that regard, method 400 may be applied to one or more videos to generate sets of positive training examples, negative training examples, degraded positive training examples, and/or edited positive and negative training examples. These training sets may be generated by the same processing system that hosts the speech-mouth consistency model, or may be generated by another processing system.

In step 402, a processing system (e.g., processing system 102 or 202) extracts a first set of video frames from a given video. This may be all of the frames of the given video, or any subset thereof.

In step 404, the processing system identify a second set of video frames from within the first set of video frames, each frame of the second set of video frames showing at least the mouth of a speaker. The processing system may make this identification in any suitable way. For example, the processing system may process each video frame in the first set using a first learned model configured to identify a speaker in a given sample of video, and a second learned model to identify a person's mouth. Likewise, in some aspects of the technology, the processing system may identify the second set of video frames based on pre-assigned labels. In such a case, the pre-assigned labels may have been applied to the video frames in any suitable way. For example, in some aspects, the pre-assigned labels may have been added to each frame of the first set of frames by human annotators. Further, in some aspects, the pre-assigned labels may be added by another processing system (e.g., one configured to identify speakers and their mouths in each frame of the first set of frames, or in the original video).

In step 406, for each given frame in the second set of frames, the processing system extracts an image from the given frame. As explained above, these images may be the entire given frame or a portion thereof (e.g., a portion showing only the speaker, the speaker's face, the speaker's lips, etc.). Likewise, in some aspects of the technology, the processing system may be configured to extract multiple images from the given frame (e.g., one representing the entire given frame, one showing only the speaker, one showing only the speaker's face, one showing only the speaker's lips, etc.).

In step 408, for each given frame in the second set of frames, the processing system generates an audio spectrogram image representing a period of audio data of the given video, the period corresponding to the given frame. As explained above, the audio data processed for each given frame may be from any suitable period of time corresponding to the given frame (e.g., a period of time preceding display of the given frame, a period of time during which the given frame would be displayed, a period of time spanning before and after the frame is to be displayed, etc.).

In step 410, for each given frame in the second set of frames, the processing system generates a positive training example comprising the image extracted from the given frame, the audio spectrogram image corresponding to the given frame, and a positive training score. As noted above, the positive training score may be based on any suitable scoring paradigm (e.g., -1.0 to 1.0, 0 to 1.0, A to F, textual labels, etc.). As also noted above, where the image in a positive training example is not isolated to the speaker, the training example will further comprise a label identifying the speaker and/or the speaker's face or mouth.

In step 412, the processing system generates a set of negative training examples, each negative training example of the set of negative training examples being generated by substituting the image or the audio spectrogram image of one of the positive training examples with the image or the audio spectrogram image of another one of the positive training examples, and each negative training example including a negative training score. This may be done in any suitable way. For example, in some aspects of the technology, negative training examples may be generated by randomly selecting a pair of positive training examples, and swapping the audio spectrogram images for the selected positive training examples to generate a pair of negative training examples.

Likewise, to avoid the possibility that two randomly selected positive training examples may be too visually similar (e.g., the speaker's lips forming the same viseme), the processing system may be configured to identify the phonemes being spoken in each positive training example, and to avoid swapping audio spectrograms which have phonemes that tend to correlate to similar lip shapes. For example, in some aspects of the technology, the processing system may be configured to identify the phonemes represented in the audio spectrogram for a given positive training example from a pre-existing transcript corresponding to the same period of time represented by the audio spectrogram. In addition, rather than identifying phonemes from a pre-existing transcript, the processing system may also be configured to process the audio spectrogram using an automated speech recognition ("ASR") utility to identify the words and/or phonemes being spoken in each positive training example.

Similarly, the processing system may be configured to analyze lip shapes, facial features, and/or facial landmarks in the images of each positive training example, and to avoid swapping audio spectrograms for examples having lip shapes, facial features, and/or facial landmarks that are deemed too similar. In some aspects of the technology, the processing system may be configured to identify lip shapes, facial features, and/or facial landmarks by processing the images using one or more facial landmark detection utilities. Likewise, in some aspects, the processing system may be configured to identify lip shapes, facial features, and/or facial landmarks based on pre-existing labels (e.g., assigned by human annotators, or by a different processing system).

In step 414, which is optional, the processing system may be configured to generate one or more degraded training examples based on each given positive training example of a set of positive training examples, each degraded training example comprising the image from the given positive training example, an audio spectrogram image representing a period of audio data of the given video that is shifted by a predetermined amount of time relative to the period represented by the audio spectrogram image of the given positive training example, and a degraded training score that is less than the training score of the given positive training example. For example, the processing system may be configured to generate a first set of degraded training examples for each positive training example in which each degraded training example's audio spectrogram image begins 30 ms later than the positive training example (and lasts the same duration), and the training score for each degraded training example is reduced by a discount factor (e.g., of 0.15/30 ms) to +0.85. Likewise, the processing system may be configured to generate a second set of degraded training examples for each positive training example in which each degraded training example's audio spectrogram image begins 60 ms later than the positive training example (and lasts the same duration), and the training score for each degraded training example is reduced to +0.70. Similar sets may be created with 90 ms, 120 ms, 150 ms, and 180 ms shifts, and corresponding training scores of +0.55, +0.40, +0.25, and +0.10, respectively. Of course, any suitable discounting paradigm may be used, including ones that are nonlinear, ones based on predetermined scoring tables, etc. Such time-shifted degraded training examples may be useful for teaching the speech-mouth consistency model to recognize where a voice dubbing may not perfectly sync with a speaker's lips, but yet may be close enough for a viewer to still consider it to be consistent. In that regard, based on the frame rate of the video, speech which precedes or lags video by less than the timing of one frame will generally be imperceptible to human viewers (e.g., a variance of +/-41.67 ms for 24 fps video). Moreover, in practice, some viewers may not begin to notice such misalignments until they approach 200 ms.

In step 416, which is also optional, the processing system may be configured to generate one or more modified training examples based on each given training example of a set of positive and negative training examples, each modified training example comprising a training score equal to that of the given training example, and one or both of: (i) an edited version of the image of the given training example; or (ii) an audio spectrogram generated from an edited version of the audio data from which the audio spectrogram image of the given training example was generated. The processing system may be configured to edit the image of a given training example in any suitable way. For example, the processing system may edit the image of a given training example by changing its brightness, color, contrast, sharpness and/or resolution, by adding pixel noise or shadow effects to the image, and/or by flipping the image horizontally to generate a mirror-image copy. Likewise, the processing system may be configured to edit the audio data of a given training example in any suitable way. For example, the processing system may edit the audio data of a given training example by changing its volume or pitch, by adding echo or other acoustic effects (e.g., to make the speech sound as though it is being delivered in a cave or large auditorium), by adding other background noise, etc. Training the speech-mouth consistency model using such modified training examples may help reduce the likelihood that the speech-mouth consistency will be confused by audio effects that change the sound of the audio data, but not the content of the speech.

In step 418, which is also optional, the processing system may be configured to generate one or more synthetic positive training examples based on each given positive training example of a set of positive training examples, each synthetic positive training example comprising the image and positive score of the given positive training example, and an audio spectrogram image based on a synthetic voice dubbing which reproduces the speech in the audio data from which the audio spectrogram image of the given positive training example was generated.

The processing system may be configured to generate the synthetic voice dubbing from a pre-existing transcript corresponding to the same period of time represented by the given positive training example's audio spectrogram image. In addition, where a pre-existing transcript is not available, the processing system may also be configured to process the given positive training example's audio spectrogram image using an ASR utility to identify the words or phonemes being spoken, and then may generate the synthetic voice dubbing based on those identified words or phonemes.

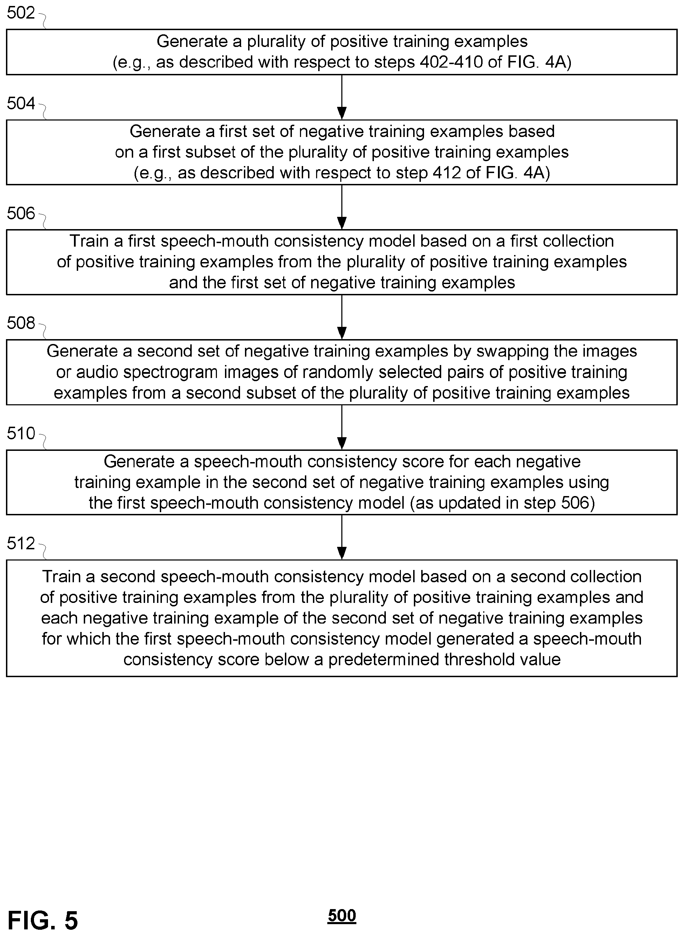

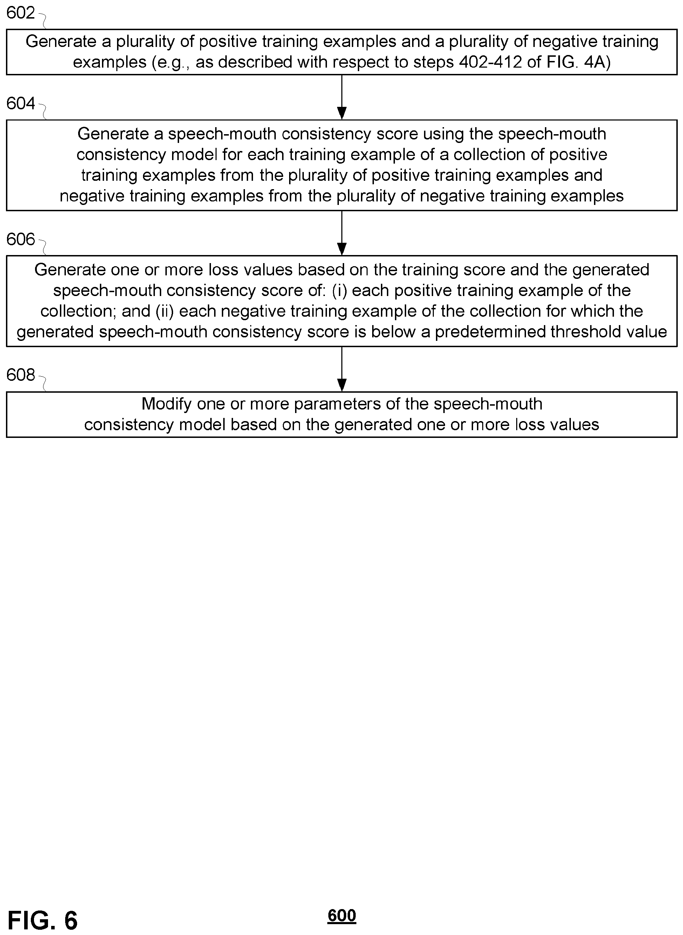

The training examples generated according to method 400 may be used to train the speech-mouth consistency model according to any suitable training protocol. In that regard, in some aspects of the technology, the speech-mouth consistency model may be trained using batches comprising positive training examples and negative training examples to generate an aggregate loss value, and one or more parameters of the speech-mouth consistency model may be modified between batches based on the aggregate loss value for the preceding batch. Likewise, in some aspects, the batches (or selected batches) may additionally include one or more of the optional types of training examples described with respect to steps 414-418 of FIG. 4B. In addition, FIGS. 5 and 6 set forth exemplary methods of training the speech-mouth consistency model which may help minimize the impact of any negative training examples that end up including an image and audio spectrogram image that are not, in fact, inconsistent.

In that regard, FIG. 5 depicts an exemplary method 500 for iteratively training a speech-mouth consistency model, in accordance with aspects of the disclosure.

In step 502, a processing system (e.g., processing system 102 or 202) generates a plurality of positive training examples. The positive training examples may be generated in any suitable way, including as described above with respect to steps 402-410 of FIG. 4A.

In step 504, the processing system generates a first set of negative training examples based on a first subset of the plurality of positive training examples. The first set of negative training examples may be generated in any suitable way. In that regard, the first set of negative training examples may be generated according to any of the options described with respect to step 412 of FIG. 4A, including those which involve further analysis to avoid the possibility that two randomly selected positive training examples may be visually similar (e.g., identifying the phonemes being spoken in each positive training example, or analyzing lip shapes, facial features, or facial landmarks). Likewise, the first set of negative training examples may be ones selected by humans based on perceived inconsistencies.

In step 506, the processing system trains a first speech-mouth consistency model based on a first collection of positive training examples from the plurality of positive training examples and the first set of negative training examples. This training may be performed according to any suitable training protocol. For example, in some aspects of the technology, training may be done in a single batch with a single back-propagation step to update the parameters of the first speech-mouth consistency model. Likewise, in some aspects, the first collection of positive and negative training examples may be broken into multiple batches, with separate loss values being aggregated during each batch and used in separate back-propagation steps between each batch. Further, in all cases, any suitable loss values and loss functions may be employed to compare the training score of a given training example to the speech-mouth consistency score generated by the first speech-mouth consistency model for that given training example.

In step 508, the processing system generates a second set of negative training examples by swapping the images or audio spectrogram images of randomly selected pairs of positive training examples from a second subset of the plurality of positive training examples.

In step 510, the processing system generates a speech-mouth consistency score for each negative training example in the second set of negative training examples using the first speech-mouth consistency model (as updated in step 506).

In step 512, the processing system trains a second speech-mouth consistency model based on a second collection of positive training examples from the plurality of positive training examples and each negative training example of the second set of negative training examples for which the first speech-mouth consistency model generated a speech-mouth consistency score below a predetermined threshold value. In this way, step 512 will prevent the second speech-mouth consistency model from being trained using any negative training example which received a speech-mouth consistency score (from the first speech-mouth consistency model) indicating that its image and audio spectrogram image may in fact be consistent. Any suitable threshold value may be used in this regard. For example, for a scoring paradigm from -1.0 to 1.0, the processing system may be configured to use only those negative training examples which received a negative speech-mouth consistency score, or only those which received a score below 0.1, 0.2, 0.5, etc.

Although exemplary method 500 only involves a first and second speech-mouth consistency model for the sake of simplicity, it will be understood that steps 508-512 may be repeated one or more additional times. For example, the procedure of step 508 may be repeated to generate a third set of negative training examples, the second speech-mouth consistency model may be used according to step 510 to score each negative training example in the third set of negative training examples, and the procedure of step 512 may be repeated to train a third speech-mouth consistency model using those of the third set of negative training examples that scored below the predetermined threshold.

Further, in some aspects of the technology, the processing system may be configured to use a different predetermined threshold value in one or more successive passes through steps 508-512. For example, to account for the fact that the second speech-mouth consistency model is likely to do a better job of scoring the third set of negative training examples (than the first speech-mouth consistency model did in scoring the second set of negative training examples), the processing system may be configured to apply a lower (i.e., not as negative) predetermined threshold value so that the third speech-mouth consistency model will end up being trained on a broader and more nuanced set of negative training examples.

FIG. 6 depicts an exemplary method 600 for training a speech-mouth consistency model using preset criteria for each negative training example, in accordance with aspects of the disclosure.

In step 602, a processing system (e.g., processing system 102 or 202) generates a plurality of positive training examples and a plurality of negative training examples. These positive and negative training examples may be generated in any suitable way, including as described above with respect to steps 402-412 of FIG. 4A.

In step 604, the processing system generates a speech-mouth consistency score using the speech-mouth consistency model for each training example of a collection of positive training examples from the plurality of positive training examples and negative training examples from the plurality of negative training examples.

In step 606, the processing system generates one or more loss values based on the training score and the generated speech-mouth consistency score of: (i) each positive training example of the collection; and (ii) each negative training example of the collection for which the generated speech-mouth consistency score is below a predetermined threshold value. In this way as well, step 606 will prevent the speech-mouth consistency model from being trained using any negative training example which received a speech-mouth consistency score indicating that its image and audio spectrogram image may in fact be consistent. Here again, any suitable threshold value may be used in this regard. For example, for a scoring paradigm from -1.0 to 1.0, the processing system may be configured to only generate loss values for those negative training examples which received a negative speech-mouth consistency score, or only for those which received a score below 0.1, 0.2, 0.5, etc. Further, any suitable loss values and loss functions may be employed to compare the training score of a given training example to the speech-mouth consistency score generated by the speech-mouth consistency model for that given training example.

In step 608, the processing system modifies one or more parameters of the speech-mouth consistency model based on the generated one or more loss values. As above, the training set forth in steps 604-608 may be performed according to any suitable training protocol. For example, in some aspects of the technology, the scoring, generation of loss values, and modification of the speech-mouth consistency model may all be done in a single batch with a single back-propagation step. Likewise, in some aspects, the collection of positive and negative training examples may be broken into multiple batches, with separate loss values being aggregated during each batch and used in separate back-propagation steps between each batch. Further, in some aspects of the technology, steps 604-608 may be repeated for successive batches of training examples, with a different predetermined threshold value used as training continues. For example, to account for the fact that the speech-mouth consistency model's predictions are expected to improve the more it is trained, the processing system may be configured to apply lower predetermined threshold values to successive batches.

As already mentioned, the speech-mouth consistency models of the present technology may be used to more efficiently generate translations and associated lip-matched voice dubbings. In that regard, as will be described further below, the speech-mouth consistency models described herein can be integrated into systems and methods for automatically generating candidate translations for use in creating synthetic or human-acted voice dubbings, aiding human translators in generating translations that match the corresponding video, automatically grading how well a candidate translation matches the corresponding video, suggesting modifications to the speed and/or timing of the translated text to improve the grading of a candidate translation, and suggesting modifications to the voice dubbing and/or video to improve the grading of a candidate translation. Further, the present technology may be used to fully automate the process of generating lip-matched translations and associated voice dubbings, or as an aid for HITL processes that may reduce (or eliminate) the amount of time and effort needed from translators, adapters, voice actors, and/or audio editors to generate voice dubbings.

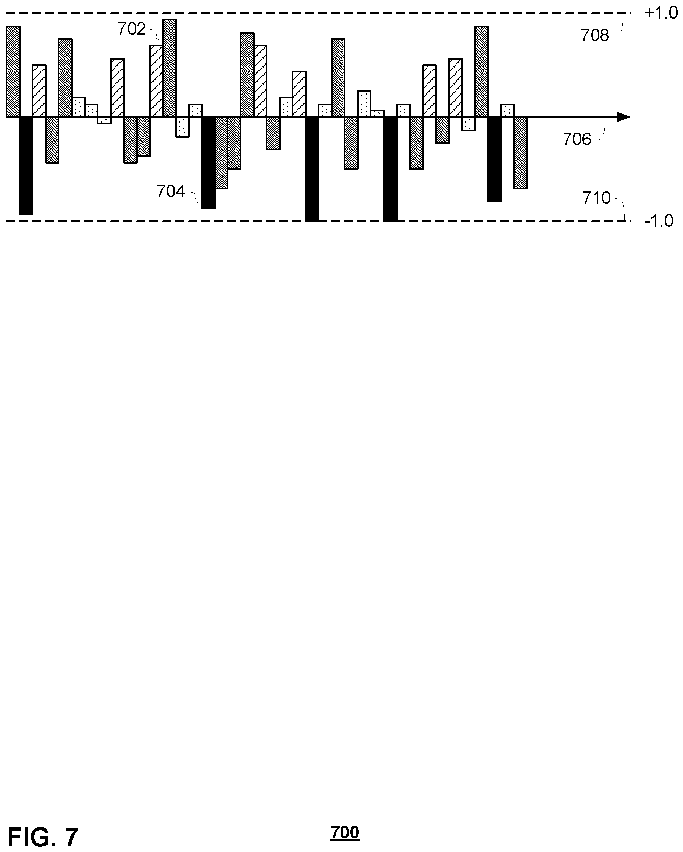

In that regard, FIG. 7 depicts an exemplary layout 700 for displaying frame-level scores from a speech-mouth consistency model for selected frames of a video, in accordance with aspects of the disclosure. This example assumes that the processing system (e.g., processing system 102 or 202) has received a voice dubbing of a candidate translation (e.g., a sequence of text) for a given sentence of the video's original dialogue. In some aspects of the technology, this voice dubbing may be provided to the speech-mouth consistency model as a synthesized audio clip generated by feeding the text of the candidate translation to a text-to-speech synthesizer (e.g., text-to-speech synthesizer 114). In such a case, the synthesized audio clip may be generated by the processing system, or may be generated elsewhere and provided to the processing system. Likewise, in some aspects of the technology, the voice dubbing may be an audio clip generated by recording a human actor as he or she voices the text of the candidate translation.

This example also assumes that the processing system has received a video clip from the video (e.g., movie, television show, etc.), and obtained an image from each given video frame of the plurality of video frames in the video clip. The video clip comprises a plurality of video frames corresponding to a period of time in which the given sentence being translated was spoken in the video's original dialogue.

Further, this example assumes that the processing system processes the voice dubbing (e.g., synthesized audio clip, human-acted audio clip) to generate a given segment of audio data corresponding to each given video frame, and further processes each given segment of audio data to generate a corresponding audio spectrogram image. However, in some aspects of the technology, a separate processing system may be configured to segment the voice dubbing, and/or to generate the corresponding audio spectrogram images, and provide same to the processing system. As will be understood, just as each segment of audio data has a correspondence to a given video frame in the video clip, each given audio spectrogram image will likewise correspond to a given video frame. In this regard, the processing system may correlate the voice dubbing with the video clip in any suitable way. For example, in some aspects of the technology, the processing system may be configured to correlate the voice dubbing and the video clip such that they each begin at the same time. Likewise, in some aspects, the processing system may be configured to correlate the voice dubbing and the video clip such that the voice dubbing starts at some predetermined amount of time before or after the video clip (e.g., 20 ms, half the length of a video frame, or by an amount that maximizes an overall score or an aggregate speech-mouth consistency score for the voice dubbing). In either case, the voice dubbing may be segmented such that each given segment of audio data has the same length as the given video frame to which it corresponds (e.g., 40.167 ms for 24 fps video).

Finally, this example assumes that the processing system has used a speech-mouth consistency model to generate frame-level speech-mouth consistency scores corresponding to each given video frame based on its corresponding image and audio spectrogram image. As explained above, these frame-level speech-mouth consistency scores represent the speech-mouth consistency model's determination of how well the voice dubbing matches each individual frame of the original video. In this regard, FIG. 7 sets forth an exemplary way of visualizing the collection of negative and positive frame-level scores that will be output by the speech-mouth consistency model.

Specifically, the exemplary layout 700 displays each frame's speech-mouth consistency score as a separate bar (e.g., bars 702, 704) on a bar graph. The bar graph of FIG. 7 has a horizontal axis 706 with time increasing to the right, as well as dashed horizontal lines 708 and 710 to indicate the maximum and minimum scores which are possible (assumed here to be +1.0 and -1.0, respectively). In addition, in the example of FIG. 7, bars of different magnitudes have been accorded different types of fill to accentuate higher and lower values. Similarly, different colors may also be used to differentiate bars of different magnitudes. However, in some aspects of the technology, each bar may also be displayed using the same color and fill regardless of its magnitude.

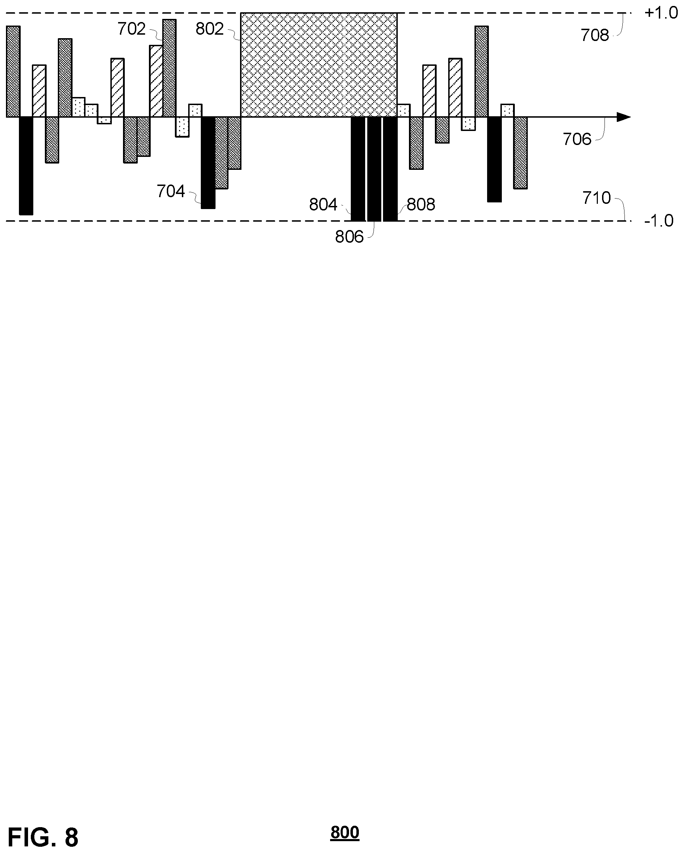

FIG. 8 builds from the exemplary layout of FIG. 7 and depicts an exemplary layout 800 for representing a mid-sentence pause in the original video, in accordance with aspects of the disclosure. In that regard, in FIG. 8, all reference numbers in common with prior figures are meant to identify the same features depicted in those prior figures and described above.

The exemplary layout 800 shows a similar bar graph to that of FIG. 7, but with a section in the middle where the original video has a pause in its dialogue. This pause is visually indicated with a pause box 802, so that a human translator can clearly see where they will need a corresponding pause in their candidate translation. In this example, it has been assumed that the candidate translation does contain a pause, but that the candidate translation begins again three frames too early. The speech-mouth consistency scores attributed to those three frames are shown as bars 804, 806, and 808. In this case, the speech-mouth consistency score for each of those three frames is shown as -1.0. In this example, a score of -1.0 is meant to indicate poor correspondence between the given image and the given audio spectrogram image for those three frames, and thus that the visual content of the frame is inconsistent with the segment of audio data (from the synthesized or human-acted audio clip) corresponding to that frame. In some aspects of the technology, the processing system may be configured to automatically assign a score of -1.0 to any frames containing speech during a known pause regardless of whether the speech-mouth consistency model attributes a higher score (e.g., which may happen for isolated frames if the speaker is making an expression consistent with speech even though they are in fact remaining silent, such as pursing their lips).

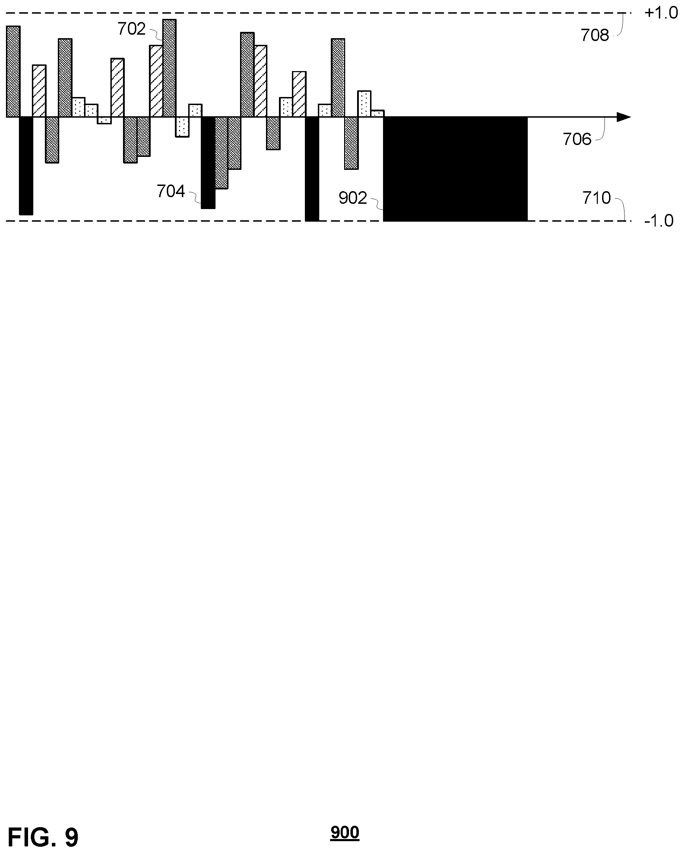

FIG. 9 builds from the exemplary layout of FIG. 7 and depicts an exemplary layout 900 for additionally representing that the candidate translation is too long to match the original video, in accordance with aspects of the disclosure. In that regard, in FIG. 9, all reference numbers in common with prior figures are meant to identify the same features depicted in those prior figures and described above.

The exemplary layout 900 shows a similar bar graph to that of FIG. 7, but with a section at the end where the original dialogue has ended and yet the candidate translation continues. This overrun of the candidate translation is visually indicated with an overrun box 902, so that a human translator can clearly see that their translation will end up overlapping with video frames beyond the end of the original utterance. Here as well, the processing system may be configured to show the overrun box 902 despite the speech-mouth consistency model attributing a higher score. For example, where the overrun causes the candidate translation to overlap with dialogue that follows the current utterance, the speech-mouth consistency model may ultimately assess those frames positively. Nevertheless, as it may be assumed that the translator will need to translate that next utterance as well, it may be desirable to ignore those scores and instead show overrun box 902 in order to indicate to the translator that the candidate translation is too long. Likewise, in some aspects of the technology, the processing system may be configured to not even generate speech-mouth consistency scores for any overrun, and to instead simply show overrun box 902.

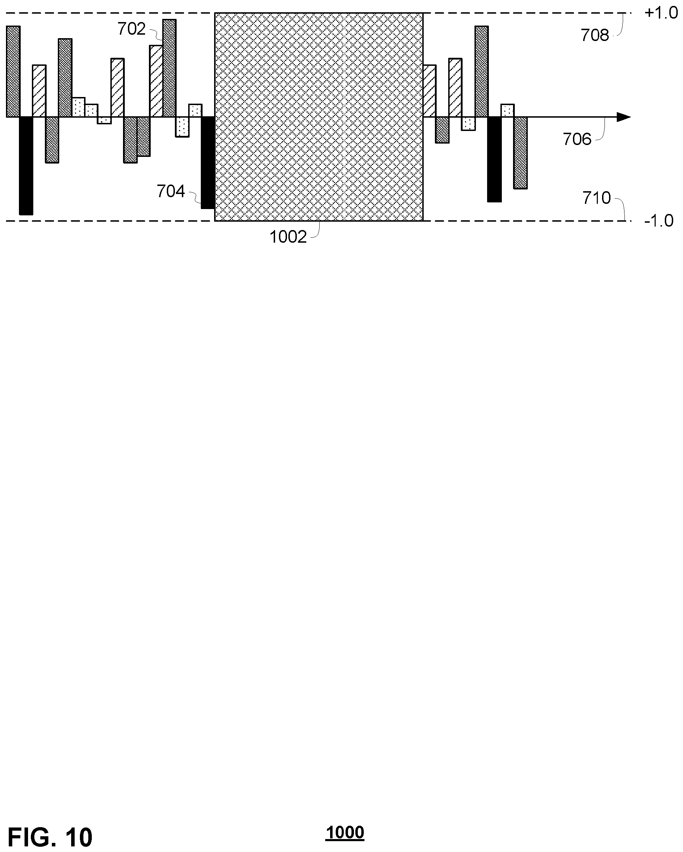

FIG. 10 builds from the exemplary layout of FIG. 7 and depicts an exemplary layout 1000 for additionally representing a period during which the original video does not afford a clear view of the speaker or the speaker's mouth, in accordance with aspects of the disclosure. In that regard, in FIG. 10, all reference numbers in common with prior figures are meant to identify the same features depicted in those prior figures and described above.

The exemplary layout 1000 shows a similar bar graph to that of FIG. 7, but with a section in the middle where the speaker or the speaker's mouth is not clearly visible in the original video (e.g., the speaker is off-screen, the speaker's head is turned so that their mouth is either not visible or only visible from the side, the speaker's mouth is fully or partially covered by a hand or an object in the foreground, etc.). This period is visually indicated on the exemplary bar graph with an obscured speaker box 1002, so that a human translator can clearly see that lip-matching is not needed for these frames of their candidate translation. The processing system may identify periods with an obscured speaker in any suitable way (e.g., from the absence of a pre-labelled tag identifying the speaker for those frames).

Here as well, the processing system may be configured to show the obscured speaker box 1002 despite the speech-mouth consistency model attributing actual scores to these frames. For example, the speech-mouth consistency model may likewise be configured to recognize such obscured speaker situations (e.g., from the absence of a pre-labelled tag identifying the speaker for those frames), and may be further configured to automatically attribute a neutral (e.g., 0) or fully positive (e.g., +1.0) score to any frames falling in such a period. Nevertheless, in order to avoid confusing the translator, the processing system may be configured to ignore those speech-mouth consistency scores and instead display the obscured speaker box 1002 so that the translator will understand that individual speech-mouth consistency scores for those frames can simply be disregarded. In addition, in some aspects of the technology, the processing system may also be configured to simply avoid generating speech-mouth consistency scores for any frames when the speaker or their mouth is not clearly visible, and instead show the obscured speaker box 1002.

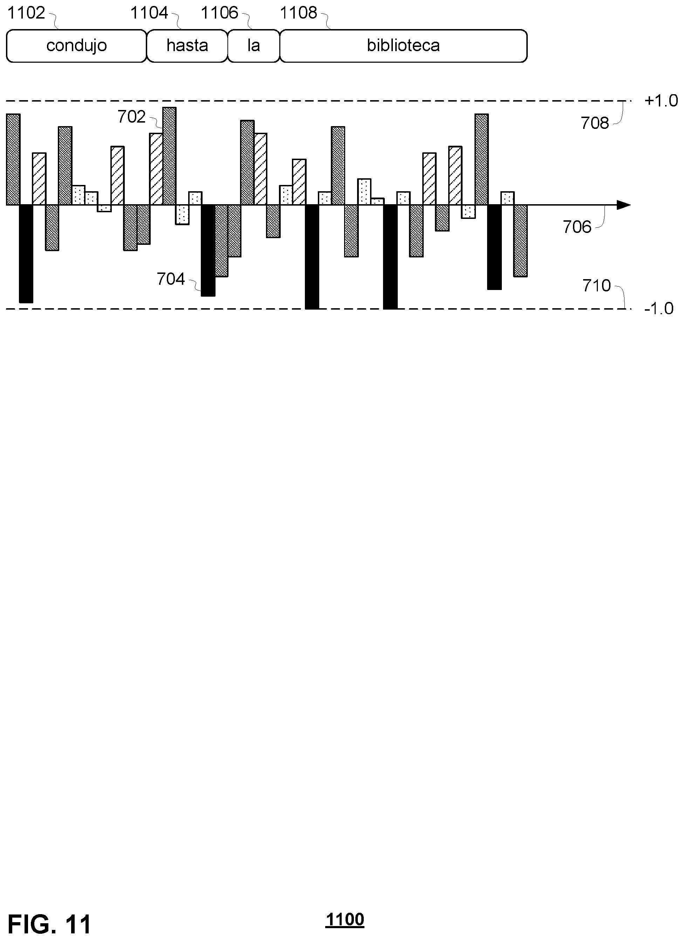

FIG. 11 builds from the exemplary layout of FIG. 7 and depicts an exemplary layout 1100 for additionally displaying a candidate translation, in accordance with aspects of the disclosure. In that regard, in FIG. 11, all reference numbers in common with prior figures are meant to identify the same features depicted in those prior figures and described above.

The exemplary layout 1100 shows how a candidate translation may be displayed and correlated to the bar graph of FIG. 7. As can be seen, each word of the candidate translation - "condujo hasta la biblioteca" - is represented as a bubble (1102, 1104, 1106, 1108) with a length corresponding to the duration of that word within the voice dubbing. The durations of each individual word may be derived in any suitable way. For example, where the voice dubbing is generated synthetically, the text-to-speech synthesizer may be configured to provide a start and end time, and/or a duration, for each spoken word or phoneme of the candidate translation. Likewise, where the voice dubbing is generated by a human actor, the start and end times may be hand-coded (e.g., by a human adapter), or the voice dubbing may be processed using an ASR utility configured to provide the words and/or phonemes of the voice dubbing and their start and end times, and/or durations. Where a voice dubbing is processed by an ASR utility, such processing may be initiated by a human user, or it may performed automatically, without human intervention (e.g., initiated by the processing system).

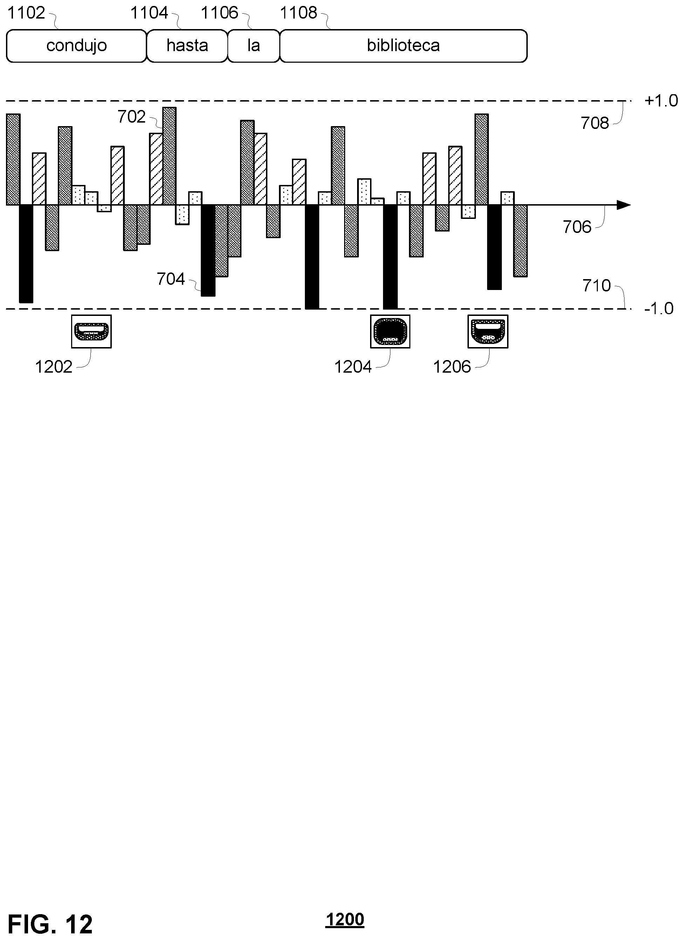

FIG. 12 builds from the exemplary layout of FIG. 11 and depicts an exemplary layout 1200 for additionally displaying identified mouth shapes from the original video, in accordance with aspects of the disclosure. In that regard, in FIG. 12, all reference numbers in common with prior figures are meant to identify the same features depicted in those prior figures and described above.

The exemplary layout 1200 shows how mouth shapes identified from the original video may be displayed and correlated to the bar graph and candidate translation of FIG. 11. In this example, it is assumed that three mouth shapes 1202, 1204, and 1206 have been identified from the original video. Each identified mouth shape is represented with an illustrative icon, and is listed below the bar graph in line with the frame(s) where it occurs in the original video. However, any suitable way of representing these identified mouth shapes, and any suitable placement, may be used.

In some aspects of the technology, the identified mouth shapes may be identified by a human (e.g., an adapter) or another processing system (e.g., a separate processing system configured to analyze the original video and identify mouth shapes), and provided to the processing system for display in layout 1200.

Likewise, in some aspects, the mouth shapes may be identified by the processing system itself using one or more facial landmark detection utilities, and/or a visual classifier specifically trained to classify the lip shapes from images. In that regard, the processing system may use the output of the facial landmark detection utility and/or the visual classifier, together with a predetermined list of mouth-shapes-of-interest (e.g., those corresponding to bilabial consonants like "p," "b," and "m," labiodental fricatives like "f" and "v," etc.), to identify which video frames show an identified mouth shape.

Further, in some aspects, the identified mouth shapes may be identified based on analysis of the words or phonemes spoken in the original video. For example, the processing system may infer the existence of these mouth shapes from the words and/or phonemes of a pre-existing transcript of the speech of the original video (or of the video clip).

As another example, the processing system may process the audio data of the original video to automatically identify the words or phonemes being spoken in the original video (e.g., using ASR), and may then infer the existence of mouth shapes from those identified words and/or phonemes.

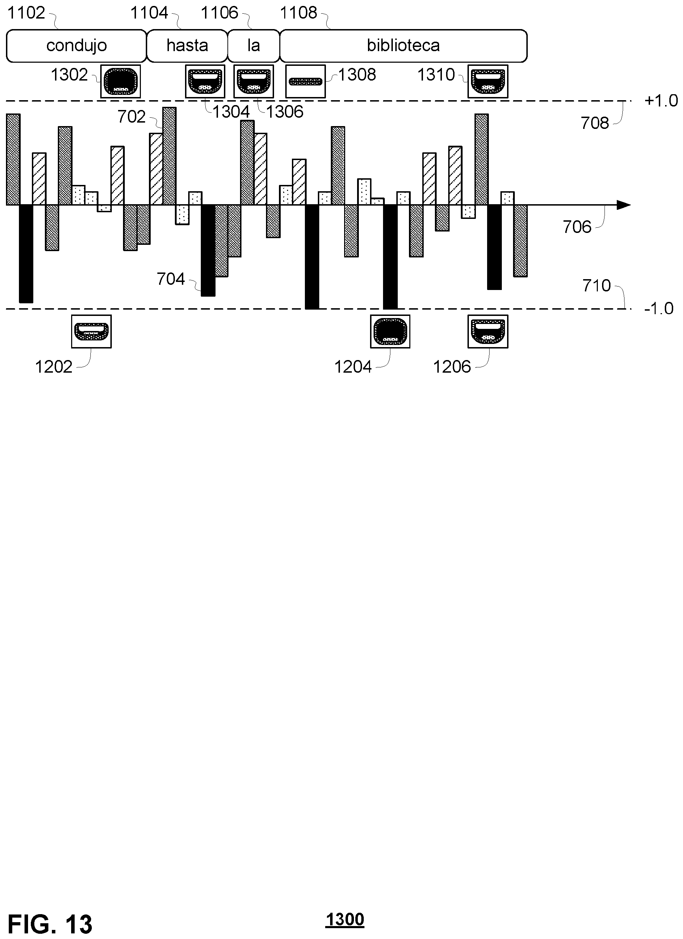

FIG. 13 builds from the exemplary layout of FIG. 12 and depicts an exemplary layout 1300 for additionally displaying identified mouth shapes from the candidate translation, in accordance with aspects of the disclosure. In that regard, in FIG. 13, all reference numbers in common with prior figures are meant to identify the same features depicted in those prior figures and described above.

The exemplary layout 1300 shows how mouth shapes identified from the candidate translation may be displayed and correlated to the bar graph and candidate translation of FIG. 12. In this example, it is assumed that five mouth shapes 1302, 1304, 1306, and 1308 have been identified from the text of the candidate translation or its voice dubbing, as explained further below. Each of these mouth shapes is also associated with an illustrative icon, but they are listed above the bar graph in line with the portion of the candidate translation and the frame(s) they correlate to in the video. However, any suitable way of representing these identified mouth shapes, and any suitable placement, may be used.

Here as well, these identified mouth shapes of the candidate translation may be identified by a human (e.g., an adapter) or another processing system, and provided to the processing system for display in layout 1300. In such a case, the human or the other processing system may further identify which frames of the video clip each identified mouth shape correlates to.

Likewise, in some aspects of the technology, the processing system may infer the existence of these mouth shapes from the words and/or phonemes of the text of the candidate translation, and a list of mouth-shapes-of-interest (e.g., those corresponding to bilabial consonants like "p," "b," and "m," labiodental fricatives like "f" and "v," etc.).

As another example, the processing system may process the voice dubbing (e.g., synthesized audio clip, human-acted audio clip) to automatically identify the words or phonemes being spoken in the voice dubbing (e.g., using ASR), and may then infer the existence of mouth shapes from those identified words and/or phonemes.

Further, in some aspects, where the voice dubbing is performed by a human, the processing system may identify mouth shapes of interest from a video recording of the human actor using one or more facial landmark detection utilities.

Each identified mouth shape may be correlated to one or more of the video frames of the video clip in any suitable way. For example, where the voice dubbing is a synthesized audio clip, and the processing system infers the existence of a given mouth-shape-of-interest from one or more words or phonemes in the text of the candidate translation, the processing system may be configured to identify the segment(s) of audio data in which those one or more words or phonemes are spoken, and to correlate the given mouth-shape-of-interest to whichever video frame(s) the identified segment(s) of audio data have been correlated (as discussed above with respect to FIG. 7). Likewise, where the processing system infers the existence of a given mouth-shape-of-interest from one or more words or phonemes being spoken in the voice dubbing (e.g., using ASR), the processing system may be configured to identify the segment(s) of audio data in which those one or more words or phonemes are spoken, and to correlate the given mouth-shape-of-interest to whichever video frame(s) the identified segment(s) of audio data have been correlated (as discussed above with respect to FIG. 7). Further, where the processing system infers the existence of a given mouth-shape-of-interest from a video recording of a human actor who performed the voice dubbing, the processing system may be configured to identify the time at which the given mouth-shape-of-interest is visible in the video recording of the human actor, identify the segment(s) of audio data which correspond to that time, and identify the video frames that have been correlated with those segment(s) of audio data (as discussed above with respect to FIG. 7).

Identifying mouth-shapes-of-interest from the candidate translation or its voice dubbing may be valuable both in HITL applications as well as fully-automated applications. In this regard, in fully-automated applications, mouth-shapes-of-interest identified from the text of the candidate translation or from a synthesized voice dubbing may be compared to mouth-shapes-of-interest identified from the video clip, and used to generate additional scores or to influence an "overall score" (as discussed below). These additional or enhanced overall scores may be used by the processing system to pick a translation that better matches certain conspicuous mouth-shapes-of-interest in the video, and thus may appear better to a human viewer, even though another translation may score slightly better solely based on speech-mouth consistency scores.

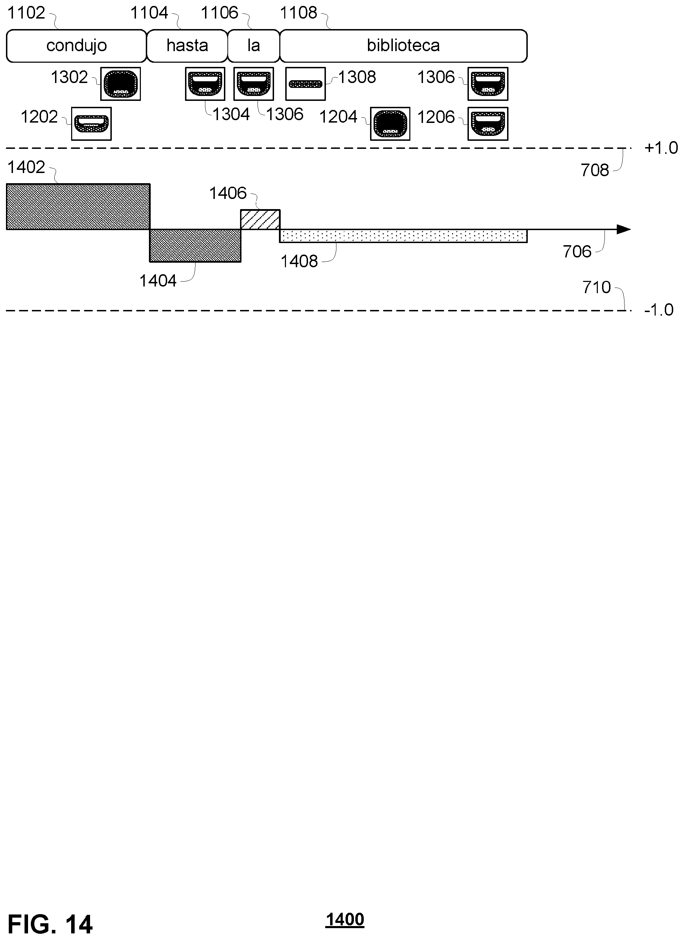

FIG. 14 depicts an exemplary layout 1400 in which the exemplary layout of FIG. 13 is rearranged and modified to display aggregated word-level scores, in accordance with aspects of the disclosure. In that regard, in FIG. 14, all reference numbers in common with prior figures are meant to identify the same features depicted in those prior figures and described above.

The exemplary layout 1400 shows an alternative way of displaying the candidate translation, identified mouth shapes, and speech-mouth consistency scores of FIG. 13. Specifically, in FIG. 14, the speech-mouth consistency scores for each frame are not individually displayed. Rather, those scores have been aggregated into word-level scores 1402, 1404, 1406, and 1408, each of which corresponds to a different word of the candidate translation above. Any suitable method of aggregating the frame-level scores may be used to generate word-level scores 1402, 1404, 1406, and 1408. For example, in some aspects of the technology, each frame-level score corresponding to a given word of the candidate translation may be identified by the processing system and averaged.

Aggregating the frame-level scores in this way may be desirable, for example, to give a translator a better way of assessing and comparing various alternative words when translating. Further, in some aspects of the technology, the processing system may be configured to allow the translator to toggle between viewing the speech-mouth consistency scores on a frame-level and an aggregated word-level. Word-level scores may also be beneficial in automated systems. For example, in some aspects of the technology, the processing system may be configured to generate or request additional automated translations where a given word-level score is below a predetermined threshold. This may help prevent the processing system from selecting a translation that, due to one glaring inconsistency, may appear worse to a human viewer than another translation that might score slightly lower based on frame-level speech-mouth consistency scores but lacks any glaring word-level inconsistencies.

In addition, in exemplary layout 1400, the mouth shapes identified from the original video (1202, 1204, and 1206) have been moved above the bar graph and arranged directly below the mouth shapes identified from the candidate translation (1302, 1304, 1306, and 1308). This may be desirable, for example, so that the translator can more easily see how closely those mouth shapes sync up with each other. Further, although not shown in FIG. 14, the exemplary layouts described herein may additionally include vertical lines or bars surrounding or underlying the identified mouth shapes of the candidate translation and the original video to further highlight how closely they sync up with one another.

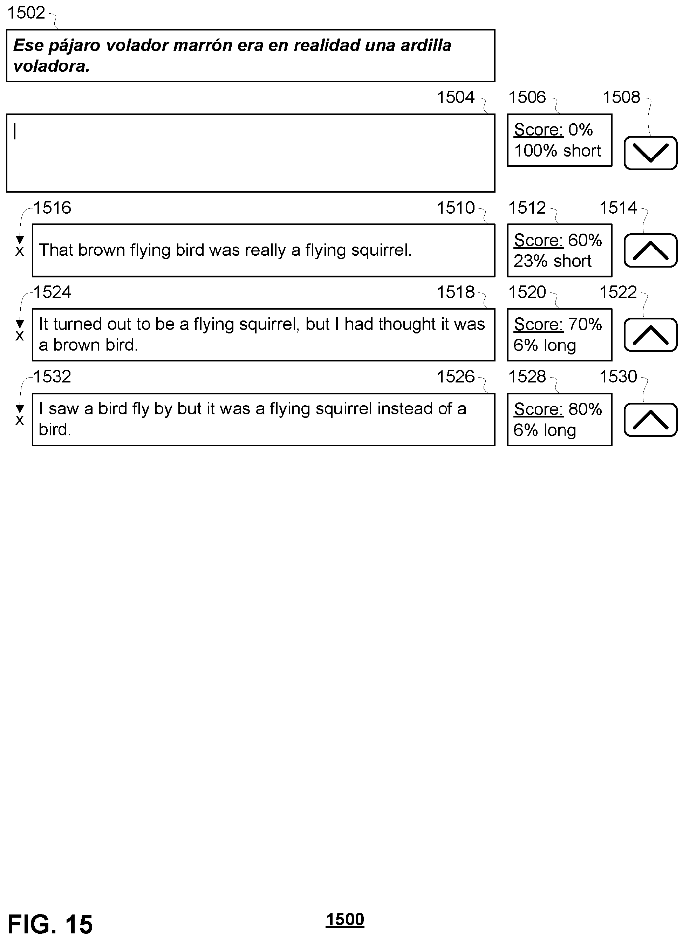

As will be shown and described below, the speech-mouth consistency models described herein, as well as the various visualizations and layouts of FIGS. 7-14 based thereon, may each be used within a system configured to automatically generate translations and/or assist a human translator as he or she develops translations to match the dialogue of a given video. In that regard, the exemplary layouts of FIGS. 15-19 set forth various options for how to use the output of a speech-mouth consistency model to help a human translator arrive at an optimal translation for a given video. Although FIGS. 15-19 each introduce specific features, further layouts consistent with the present technology may employ any combination or subcombination of such features.

For example, FIG. 15 depicts an exemplary layout 1500 for presenting a sentence to be translated, a set of automatically generated translations and associated scores, and a text box for accepting a translator's candidate translation, in accordance with aspects of the disclosure.

The exemplary layout 1500 displays the original sentence 1502 to be translated, and a text box 1504 directly below it where the translator can enter a translation. Automatically generated translations 1510, 1518, and 1526 are displayed below the text box 1504 as options which may be selected, but the text box 1504 is left blank so as to allow the translator to focus on the original sentence 1502 and have autonomy in choosing how to frame the translation. This can help in reducing an "anchoring effect" which may occur if the translator is instead asked to start from an automatically generated translation and directly edit it to arrive at the final candidate translation.

In the example of FIG. 15, if the translator wishes to instead work from one of the candidate translations, he or she may click its corresponding up-arrow button (1514, 1522, 1530) to move the translation up to the text entry box 1504. Likewise, if the translator wishes to save one of their candidate translations and work on a new one, he or she may click the down arrow button 1508 to cause it to be removed from the text entry box 1504 and listed below with the automatically generated translations. Further, each automatically generated translation may be removed from view by clicking the "x" to the left of the translation (indicated by arrows 1516, 1524, and 1532).

As shown in FIG. 15, the automatically generated translations are each scored by the processing system, as shown in boxes 1506, 1512, 1520, and 1528. For example, automatically generated translation 1510 has been assessed to have an overall score of 60% and a duration that places it 23% short of the video to which it is being matched. Here as well, these translations may be generated by any suitable translation model. In addition, the translation API may be configured to generate multiple translations, but display only a subset thereof (e.g., a predetermined number of translations with the highest overall scores, highest speech-mouth consistency scores, best duration scores, some aggregate thereof, etc.). Further, the translation API may incorporate a translation glossary of approved phrases to bias the model to use expressions that are more natural and consistent. Moreover, the translation API may be configured to base its suggestions in part on a log of the accepted prior translations so as to make its suggestions more consistent with the verbiage the translator has already used.

Likewise, the contents of the text entry box 1504 are also scored as shown in box 1506. In this case, as no candidate translation has yet been entered into text entry box 1504, the overall score is shown as 0% and the candidate translation is assessed as being 100% short of its target length. In some aspects of the technology, a processing system (e.g., processing system 102 or 202) may be configured to update the scores in box 1506 in real-time as a translator works. Likewise, in some aspects, the processing system may be configured to update the scores in box 1506 on a periodic basis, and/or in response to an update request from the translator.

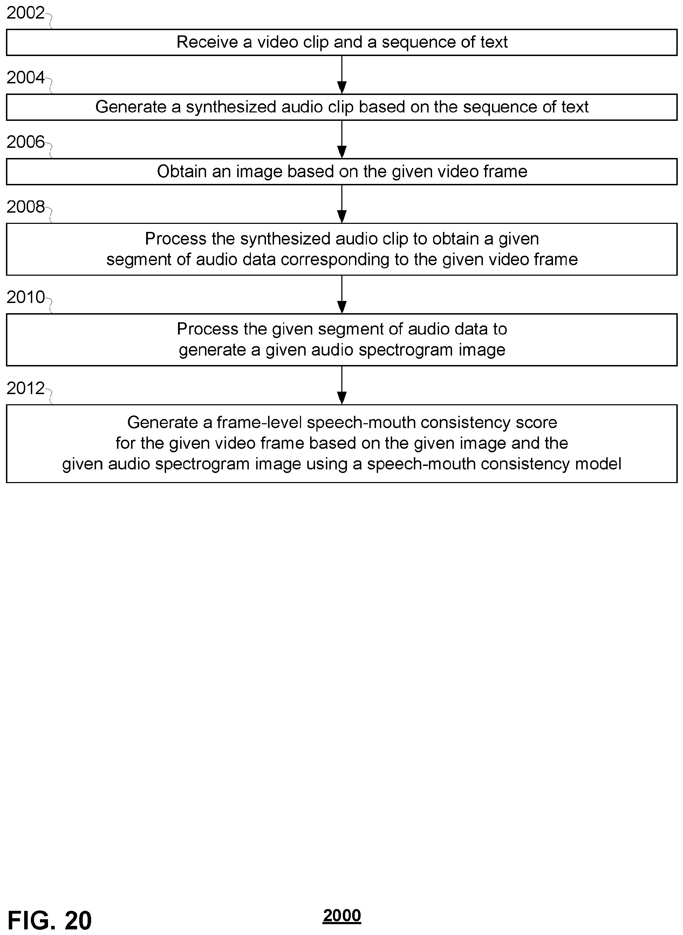

The overall scores shown in boxes 1506, 1512, 1520, and 1528 are aggregate values based at least in part on the frame-level scores of the speech-mouth consistency model for each automatically generated translation. Such frame-level speech-mouth consistency scores may be generated by the processing system for each automatically generated translation using a speech-mouth consistency model, according to the processing described above with respect to FIGS. 3 and 7 and below with respect to FIG. 20. In addition, the processing system may be configured to generate the overall scores in any suitable way. For example, in some aspects of the technology, the overall scores may be based in whole or in part on an average of the frame-level speech-mouth consistency scores for the entire translation. Likewise, in some aspects of the technology, the processing system may be configured to generate word-level speech-mouth consistency scores (as discussed above with respect to FIG. 14) for each automatically generated translation, and to generate the overall score for each given translation based in whole or in part on the generated frame-level speech-mouth consistency scores for the given translation.

In some aspects of the technology, the overall scores may also be based in part on how many of the original video's identified mouth shapes are being matched in the translation (e.g., a percentage of how many identified mouth shapes are matched, or a time-weighted average thereof based on how long each mouth shape is on screen). Likewise, in some aspects of the technology, the overall scores may be penalized based on various criteria, such as when the voice dubbing does not match a pause in the video, when the voice dubbing is particularly short or long relative to the original video (e.g., past some predetermined threshold such as 10 ms, 20 ms, 30 ms, 40 ms, etc.), and/or when the speech rate is too fast or too slow relative (e.g., faster or slower than a predetermined range of "normal" speech rates, faster or slower than the preceding voice dubbing by some predetermined percentage, etc.). Further, the overall scores 1506, 1512, 1520, and 1528 may be based on any combination or subcombination of the options just described.

In some fully automated systems, the processing system may be configured to select a given automatically generated translation based at least in part on its overall score satisfying some predetermined criteria. For example, in some aspects of the technology, the processing system may be configured to select a given automatically generated translation based on its overall score being higher than the overall scores for all other automatically generated translations. Likewise, in some aspects, the processing system may be configured to select a given automatically generated translation based on its overall score being higher than a predetermined threshold. The processing system may further be configured to then combine the video clip with a synthesized audio clip corresponding to the selected automatically generated translation to generate a modified video. The modified video (which may be augmented to include the synthesized voice dubbing as well as the original audio data, or which may be modified to replace a portion of the original audio data of the video with the synthesized audio clip), may be stored on the processing system, and/or output for storage, transmission, or display. Likewise, in some aspects of the technology, the processing system may be configured to select a given automatically generated translation based at least in part on its overall score, and then to output the synthesized audio clip to another processing system for storage and/or use in generating a modified video (e.g., as just described). In this way, a voice dubbing may be automatically generated in a resource-efficient manner.

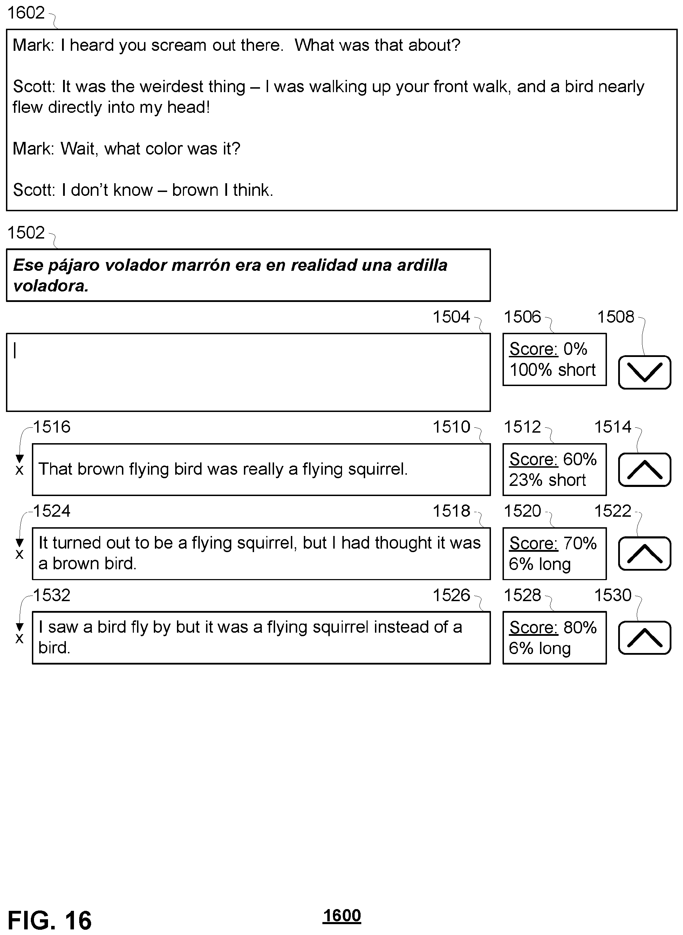

FIG. 16 builds from the exemplary layout of FIG. 15 and depicts an exemplary layout 1600 that additionally includes a prior translation history, in accordance with aspects of the disclosure. In that regard, in FIG. 16, all reference numbers in common with prior figures are meant to identify the same features depicted in those prior figures and described above.

The exemplary layout 1600 displays the contents of layout 1500 of FIG. 15, including an additional past-translations box 1602 including at least a portion of the translator's prior translations. This may be helpful to the translator in generating translations that are both consistent, and make sense in the context of past dialogue. This additional context may also be helpful in preventing the translator from becoming too fixated on the overall scores and/or duration scores. In that regard, while it may seem in FIG. 16 that the automatically generated translations 1524 and 1532 are preferrable to automatically generated translation 1516 based on their respective overall scores and duration scores, the context provided in the past-translations box 1602 shows that the content of the automatically generated translation 1516 makes the most sense as a further response from speaker Mark. As a result, after consulting the past-translations box 1602, the translator may end up focusing on modifying automatically generated translation 1516 to try to maintain its general meaning or intent while making it a bit longer and more consistent with the mouth shapes in the original video.

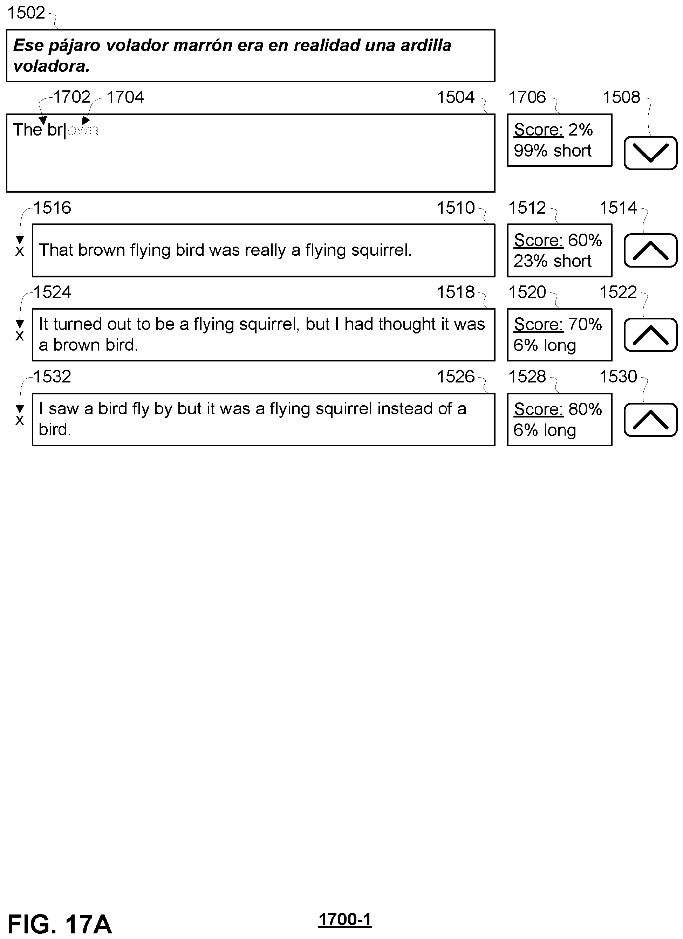

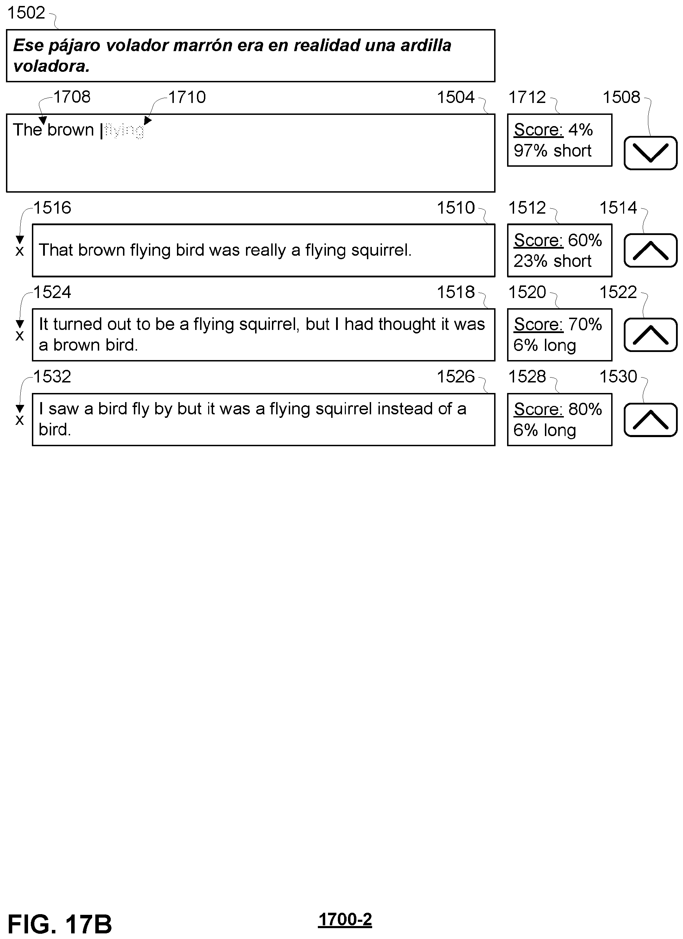

FIGS. 17A and 17B depict exemplary layouts 1700-1 and 1700-2 illustrating how autocomplete may be employed within the exemplary layout of FIG. 15, in accordance with aspects of the disclosure. In that regard, in FIGS. 17A and 17B, all reference numbers in common with prior figures are meant to identify the same features depicted in those prior figures and described above.

The exemplary layout 1700-1 of FIG. 17A displays the contents of layout 1500 of FIG. 15 as it might appear in the course of a translator entering a candidate translation into text entry box 1504. In that regard, in the example of FIG. 17A, the translator has entered "The br" as shown by arrow 1702. In this example, it is assumed that the processing system (e.g., processing system 102 or 202) has been configured with an autocomplete functionality, and has suggested that "br" be completed with the suffix "own" (as shown by arrow 1704) to read "brown." In addition, in response to the entry of this partial candidate translation into text entry box 1504, the processing system has updated its associated scores 1706 to reflect an overall score of 2% and to indicate that the candidate translation is now 99% short of the original video. As will be appreciated, this duration score (and those shown in FIGS. 15, 16, 17B, 18, and 19, and discussed above and below) may be generated based on any suitable comparison of the length of the audio clip and the length of the video clip to which it is being matched. Thus, in some aspects of the technology, the processing system may generate the duration score by comparing the length of a synthesized audio clip generated based on the candidate translation to the length of the video clip. Likewise, in some aspects, the duration score may instead be a value representing how long or short the synthesized audio clip would be relative to the video clip (e.g., "0.156 seconds short"), and thus may be generated by subtracting the length of the video clip from the length of the synthesized audio clip.

Similarly, the exemplary layout 1700-2 of FIG. 17B displays the contents of layout 1700-1 as it might appear after the translator has accepted the first autocompletion suggestion (as shown by arrow 1704 in FIG. 17A). This may be done in any suitable way, such as by continuing to type the letters "own," by hitting the tab key to accept the suggested suffix "own," etc. In this case, after having accepted that first suggestion, the processing system is now suggesting that the word "flying" would follow "The brown" as shown by arrows 1708 and 1710. In addition, in response to the entry of this additional content into text entry box 1504, the processing system has further updated its associated scores 1712 to reflect an overall score of 4% and to indicate that the candidate translation is now 97% short of the original video.

The processing system's autocompletion utility may be configured to generate suggestions in any suitable way. For example, in some aspects of the technology, the processing system may be configured to base its autocompletion suggestions on the contents of the automatically generated translations 1516, 1524, and 1532 (and, optionally, any other translations that were generated but not chosen for display). In addition, the processing system may also be configured to indicate the basis for any such autocompletion suggestion by highlighting where that suggestion can be found in the automatically generated translations below the text entry box. For example, in FIG. 17B, the processing system may be configured to highlight the word "brown" where it appears in automatically generated translations 1516 and 1524. Likewise, in some aspects of the technology, the processing system may be configured to use an autocompletion model that operates independently of the translations suggested by the translation model, and simply makes suggestions based on dictionaries, grammar rules, learned speech patterns, etc.

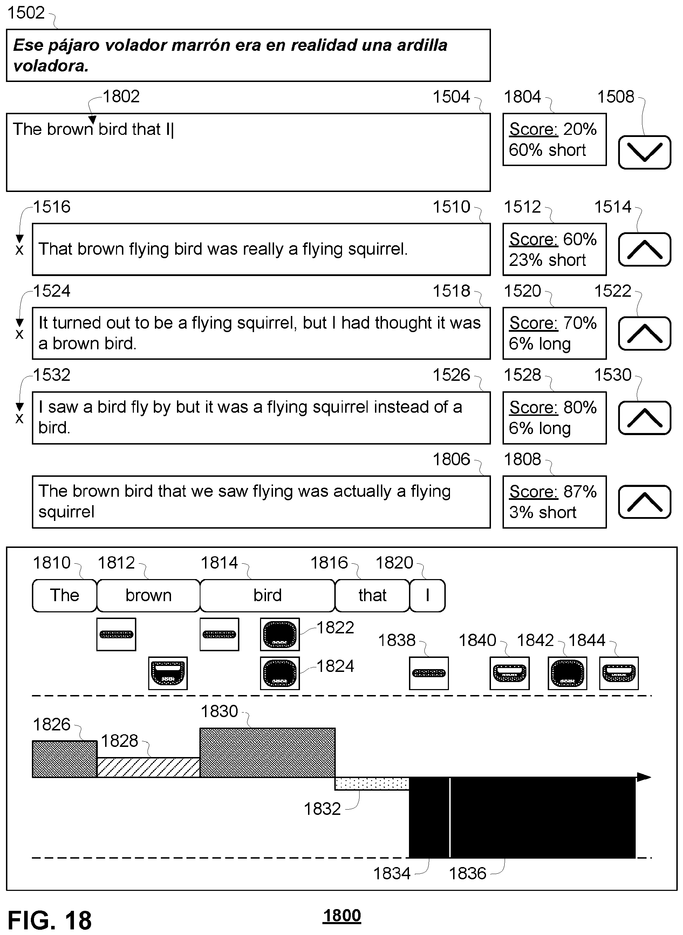

FIG. 18 builds from the exemplary layout of FIG. 15 and depicts an exemplary layout 1800 that further includes an additional automatically generated translation based on the content of the text entry box as well as a graphical representation of the translator's candidate translation (similar to that shown in FIG. 14), in accordance with aspects of the disclosure. In that regard, in FIG. 18, all reference numbers in common with prior figures are meant to identify the same features depicted in those prior figures and described above.

The exemplary layout 1800 displays the contents of layout 1500 of FIG. 15, including an additional automatically generated translation 1806 which is based on the content of the text entry box 1504, and which continues to change as the translator modifies the candidate translation. In that regard, in this example, it is assumed that the translation model has been configured to generate translations using a given prefix. Likewise, it is assumed that the processing system (e.g., processing system 102 or 202) has been configured to parse the content of text entry box 1504 into each possible prefix, and to submit separate calls to the translation API using each such prefix.

Thus, in this case, the translator has typed "The brown bird that I" into text entry box 1504 (as shown by arrow 1802), which is 60% short of the original video and has an updated overall score of 20% (as shown in 1804). Based on this entry, the processing system will issue five separate calls to the translation API to translate the original sentence 1502, each call being based on one of the following five prefixes: (1) "the brown bird that I"; (2) "the brown bird that"; (3) "the brown bird"; (4) "the brown"; and (5) "the."

The processing system may be configured to display some or all of the translations returned from the translation API in response to these calls. However, in the example of FIG. 18, it is assumed that the processing system is configured to assess the length of each translation returned by the translation API, and to score each translation against the frames of the original video using the speech-mouth consistency model to generate an overall score and duration (e.g., as shown in box 1808). It is further assumed that the processing system will then display only the highest ranked translation in box 1806 based on its overall score, its duration, or its overall score and duration. In this case, as shown in boxes 1806 and 1808, the highest rated translation returned by the translation API is the one based on the prefix "the brown bird that," which has an overall score of 87% and which is 3% short of the original video.

In addition, as the human translator continues to type, the processing system will make additional API calls based on the changing text in box 1504. As a result, the contents of box 1806 will continue to change over time if any of these successive calls results in the translation API returning a translation which scores even better than the one currently shown in box 1806.

As can be seen, the exemplary layout 1800 also incorporates a visualization showing how well the translator's candidate translation (entered in text box 1504) matches the original video. This visualization is similar to that shown and described above with respect to FIG. 14, showing each word of the candidate translation (1810-1820), and an associated word-level score (1826-1834) for each word aggregated from the individual frame-level scores corresponding to that word (as discussed above). In addition, because the candidate translation is still too short, the bar graph shows an underrun box 1836. This underrun box serves a similar purpose to the overrun box 902 of FIG. 9, making it easy for the human translator to see that their translation will end while the speaker continues to speak in the original video frames.

Further, like FIG. 14, the visualization in FIG. 18 also includes mouth shapes identified from the candidate translation in a first row directly below the words of the candidate translation, and mouth shapes identified from the original video listed in a second row directly below the first row. As noted above, this allows the translator to visually assess how closely the identified mouth shapes of the candidate translation correspond to the those of the original video. Thus, in FIG. 18, the translator will be able to see that the word "bird" (1814) in the candidate translation results in a mouth shape 1822 which closely syncs up with the same mouth shape 1824 identified in the original video, thus resulting in a fairly positive word-level score 1830. On the other hand, the translator will also be able to see that the word "I"

(1820) is being matched up with a frame which depicts a very distinct mouth shape 1838 associated with a bilabial consonant, thus resulting in a negative word-level score 1834. Further, because the visualization shows all mouth-shapes-of-interest that were identified for the original video clip, including those which occur past the end of the pending candidate translation, the translator may use the remaining identified mouth shapes (e.g., 1840, 1842, and 1844) to guide their word choices as they finish the candidate translation.

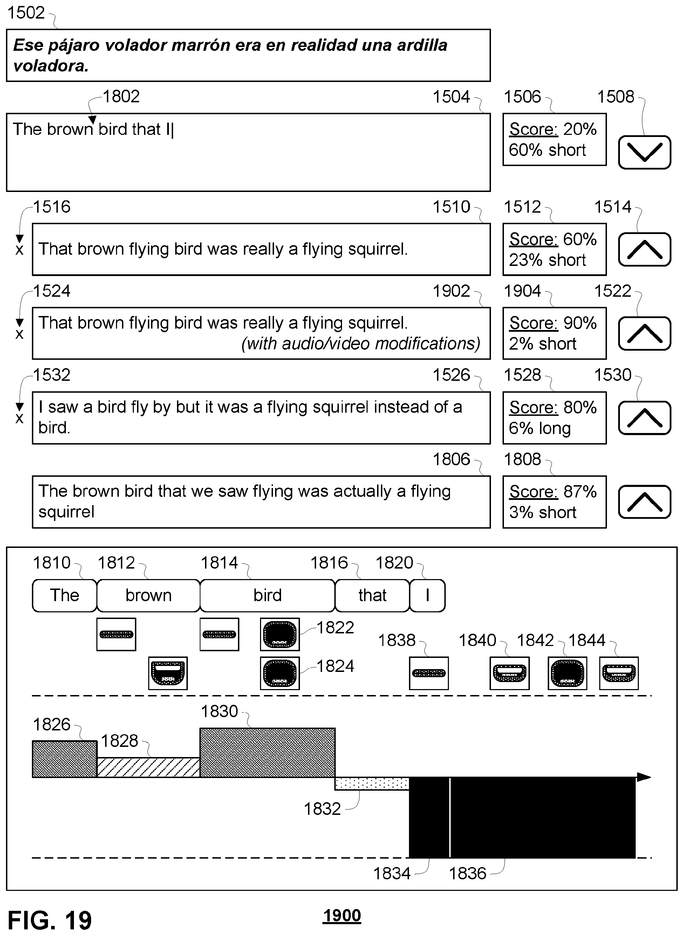

FIG. 19 builds from the exemplary layout of FIG. 18 and depicts an exemplary layout 1900 that further includes an additional automatically generated translation option that incorporates audio or video modifications, in accordance with aspects of the disclosure. In that regard, in FIG. 19, all reference numbers in common with prior figures are meant to identify the same features depicted in those prior figures and described above.

The exemplary layout 1900 displays the contents of the exemplary layout 1800 of FIG. 18, but with a new automatically generated translation 1902. In this example, automatically generated translation 1902 uses the same words as automatically generated translation 1510, but incorporates a modified version of the voice dubbing and/or video, which results in an improved duration that is just 2% short and an improved overall score of 90% as shown in box 1904. In some aspects of the technology, the processing system (e.g., processing system 102 or 202) may be configured with a playback feature allowing the translator to watch and listen to the modified sample to see how natural it appears. Likewise, the processing system may be configured to show how these changes appear in the bar graph visualization below when a user clicks the up arrow 1522 to actively select that option.

The processing system may be configured to automatically modify the video to better conform it to the translation, using one or more of the following approaches. For example, where the video must be lengthened to better fit the translation, the processing system may be configured to duplicate one or more video frames in a suitable way. In that regard, where multiple frames must be duplicated, the processing system may be configured to select frames for duplication at predetermined intervals so as to avoid making the video appear to pause. The processing system may also be configured to identify any sequences in which the frames are nearly identical (e.g., where there is very little movement taking place on screen), and duplicate one or more frames within those sequences, as doing so may not be as likely to be noticed by a viewer. In that regard, where a sequence of frames is particularly identical, it may be possible to repeat that set of frames one or more times (thus "looping" the set of frames) without it being noticeable to most viewers. Further, the processing system may be configured to select which frames to duplicate based on how their duplication will impact the synchronization of various mouth-shapes-of-interest between the translation and the modified video.

Likewise, where the video must be shortened, the processing system may be configured to remove one or more frames in any suitable way. Here as well, where multiple frames must be removed, the processing system may be configured to do so at predetermined intervals, or in sequences where the frames are nearly identical (e.g., where there is very little movement taking place on screen), as doing so would not be as likely to be noticed by a viewer. The processing system may also be configured to select which frames to remove based on how their removal will impact the synchronization of various mouth-shapes-of-interest between the translation and the modified video.

Further, in some aspects of the technology, the processing system may be configured to use a balanced approach of modifying the video, in which the duration of the video remains unchanged. In such a case, the processing system may be configured to remove one or more frames from one section of the video, and duplicate an equivalent number of frames in a different section of the video, so that the modified version of the video has the same number of frames as the original video. Here as well, the processing system may be configured to choose how and where to remove and insert frames based on how those frame additions and subtractions will impact the synchronization of various mouth-shapes-of-interest between the translation and the modified video.

Moreover, in some aspects of the technology, the processing system may be configured to use a reanimation utility (e.g., reanimation utility 120) to make modifications to individual frames which alter the appearance of a speaker's lips, face, and/or body. In some aspects, the processing system may be configured to automatically determine how to make such changes based on how they will impact the synchronization of various mouth-shapes-of-interest between the translation and the modified video. Likewise, in some aspects, the processing system may be configured to allow a human user to use the reanimation utility to make such changes. In such a case, the processing system may further be configured to show the user how their changes to a given frame or frames will impact the speech-mouth consistency scores and/or the voice dubbing's overall score. In all cases, the processing system may be configured to use the reanimation utility alone, and/or in combination with any of the other video or audio modification options discussed herein.

In addition, in some aspects of the technology, the processing system may be configured to automatically modify the voice dubbing to better conform it to the video. For example, the processing system may be configured to instruct the text-to-speech synthesizer to lengthen or shorten one or more words, and/or to insert one or more pauses in the translation. The processing system may be configured to do this in order to optimize the overall duration of the voice dubbing, and/or to better synchronize the mouth shapes of the translation with those of the original video. Here again, the processing system may give the translator the ability to listen to the resulting modified voice dubbing, so that he or she can assess how natural the final result ends up being. In some aspects of the technology, the modified voice dubbing may be used as the final voice dubbing. However, in some aspects of the technology, the modified voice dubbing may simply be used as a guide for a human actor, who will then attempt to act out the candidate translation using the same cadence, word lengths, and pauses.

Moreover, in some aspects of the technology, the processing system may be configured to use one or more the methods set forth above to make modifications to both the audio and video. For example, the processing system may be configured to modify the speed of the synthesized audio to conform it to the length of the video, and then may employ a balanced approach to modifying the video so as to better synchronize the mouth shapes of the voice dubbing and the modified video. In addition, in some aspects of the technology, further changes to the modified video may be made using a reanimation utility.

Although FIG. 19 shows an example in which the processing system has generated modified voice dubbing and/or video frame(s) for one of the automatically generated translations, the processing system may likewise be configured to allow a human user to edit the voice dubbing and/or the video frames, and to see the results in the visualization at the bottom of FIG. 19. Likewise, in some aspects of the technology, where the processing system initially modified the voice dubbing and/or video frame(s), the processing system may be configured to allow a human user to make further edits to the modified voice dubbing and/or video frames (e.g., to fine-tune their timing based on what the user feels looks most realistic).

FIG. 20 depicts an exemplary method 2000 for generating frame-level speech mouth consistency scores based on a sequence of text and a video clip, in accordance with aspects of the disclosure. In that regard, FIG. 20 sets forth one exemplary way of generating the various frame-level speech mouth consistency scores depicted and described above with respect to FIGS. 3-19. In this example, it is assumed that the steps of method 2000 will each be performed using one or more processors of a processing system (e.g., processing system 102 or 202).

In step 2002, the processing system receives a video clip and a sequence of text. In this example, it is assumed that the video clip represents a portion of a video, and comprises a plurality of video frames. In some aspects of the technology, the video clip may also include a corresponding portion of the video's original audio data, although that is not necessary for the purposes of exemplary method 2000. The sequence of text may be any combination of two or more words, including a sentence fragment, a full sentence, a full sentence and an additional sentence fragment, two or more sentences or sentence fragments, etc. In some aspects of the technology, the sequence of text may be provided to the processing system by a human. For example, a human translator may input the sequence of text through a keyboard. Likewise, a human translator or voice actor may speak the sequence of text into a microphone, and the processing system or another processing system may be configured to convert the recorded voice input into a sequence of text (e.g., using ASR). Further, in some aspects of the technology, the sequence of text may be generated by the processing system using a translation model (e.g., translation utility 112). For example, the processing system may generate the sequence of text by detecting speech in the video's original audio data (e.g., using ASR) and generating a translation thereof using a translation model. Likewise, the processing system may generate the sequence of text by using a translation model to translate a preexisting transcript (or portion thereof) of the video's original dialogue. Further, in some aspects of the technology, another processing system may generate the sequence of text in one of the ways just described, and may provide the sequence of text to the processing system of method 2000.

In step 2004, the processing system generates a synthesized audio clip based on the sequence of text. For example, the processing system may do this by feeding the sequence of text to a text-to-speech synthesizer (e.g., text-to-speech synthesizer 114), as described above with respect to FIGS. 1 and 7.

Next, for each given video frame of the plurality of video frames, the processing system will perform steps 2006-2012. In that regard, in step 2006, the processing system obtains an image based on the given video frame. The processing system may obtain this image in any suitable way. For example, in some aspects of the technology, the image may simply be an image extracted directly from the video frame. Likewise, in some aspects, the image may be a processed version (e.g., downsampled, upsampled, or filtered version) of an image extracted directly from the video frame. Further, in some aspects, the image may be a cropped version of an image extracted directly from the video frame, such as a portion that isolates the face or mouth of the speaker.

In step 2008, the processing system processes the synthesized audio clip to obtain a given segment of audio data corresponding to the given video frame. As discussed above with respect to FIG. 7, the processing system may segment the audio data of the synthesized audio clip, and correlate each segment to a given video frame in any suitable way. For example, in some aspects of the technology, the processing system may correlate the synthesized audio clip based on the assumption that both start at the same time, that the synthesized audio clip starts some predetermined amount of time before the video clip, that the synthesized audio clip starts some predetermined amount of time after the video clip, etc. The processing system may then segment the synthesized audio clip into segments that have the same length as each video frame (e.g., 40.167 ms for 24 fps video), and may associate the first segment of audio data to the first video frame, the second segment of audio data to the second video frame, etc. Further, each segment of audio data may be a portion of audio data obtained directly from the synthesized audio clip, or may be a processed version (e.g., downsampled, upsampled, or filtered version) of audio data obtained directly from the synthesized audio clip.

In step 2010, the processing system processes the given segment of audio data to generate a given audio spectrogram image. This audio spectrogram image may take any suitable form, and may be generated by the processing system in any suitable way, as described in more detail above with respect to FIGS. 3 and 7.

In step 2012, the processing system generates a frame-level speech-mouth consistency score for the given video frame based on the given image and the given audio spectrogram image using a speech-mouth consistency model. The processing system and speech-mouth consistency model may generate this frame-level speech-mouth consistency score in any suitable way, as described in more detail above with respect to FIGS. 3 and 7.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of exemplary systems and methods should be taken by way of illustration rather than by way of limitation of the subject matter defined by the claims. In addition, the provision of the examples described herein, as well as clauses phrased as "such as," "including," "comprising," and the like, should not be interpreted as limiting the subject matter of the claims to the specific examples; rather, the examples are intended to illustrate only some of the many possible embodiments. Further, the same reference numbers in different drawings can identify the same or similar elements.

## Claims

1. A computer-implemented method (2000) comprising:
generating (2004), using one or more processors (104) of a processing system (102), a synthesized audio clip based on a sequence of text using a text-to-speech synthesizer (114), the synthesized audio clip comprising synthesized speech corresponding to the sequence of text; and
for each given video frame of a video clip comprising a plurality of video frames:
processing the video clip, using the one or more processors, to obtain (2006) a given image (302) based on the given video frame;
processing (2008) the synthesized audio clip, using the one or more processors, to obtain a given segment of audio data corresponding to the given video frame;
processing (2010) the given segment of audio data, using the one or more processors, to generate a given audio spectrogram image (304); and
generating (2012), using the one or more processors, a frame-level speech-mouth consistency score (316) for the given video frame based on the given image and the given audio spectrogram image using a speech-mouth consistency model (116, 306), wherein the frame-level speech-mouth consistency score is an indication of how consistent the given image is with the given audio spectrogram image, and wherein the frame-level speech-mouth consistency score is used for: generating a modified video; generating a translation; or generating a voice dubbing.

2. The method of claim 1, further comprising generating, using the one or more processors, an overall score (1506, 1512, 1520, 1528) based at least in part on the generated frame-level speech-mouth consistency score corresponding to each given video frame of the plurality of video frames.

3. The method of claim 1 or 2, further comprising:
identifying, using the one or more processors, a set of the generated frame-level speech-mouth consistency scores corresponding to a given word of the sequence of text; and
generating, using the one or more processors, a word-level speech-mouth consistency score (1402, 1404, 1406, 1408) for the given word based on the identified set of the generated frame-level speech-mouth consistency scores.

4. The method of claim 3, further comprising generating, using the one or more processors, an overall score based at least in part on the generated word-level speech-mouth consistency score corresponding to each given word of the sequence of text.

5. The method of any of claims 1 to 4, further comprising generating, using the one or more processors, a duration score based on a comparison of a length of the synthesized audio clip and a length of the video clip.

6. The method of any of claims 1 to 5, further comprising:
processing, using the one or more processors, the video clip to identify a set of one or more mouth-shapes-of-interest from a speaker visible in the video clip; and
for each given mouth-shape-of-interest of the set of one or more mouth-shapes-of-interest, correlating, using the one or more processors, the given mouth-shape-of-interest to one or more video frames of the plurality of video frames.

7. The method of any of claims 1 to 6, wherein the video clip further comprises original audio data, and the method further comprises:
processing, using the one or more processors, the original audio data to identify one or more words or phonemes being spoken by a speaker recorded in the original audio data;
generating, using the one or more processors, a set of one or more mouth-shapes-of-interest based on the identified one or more words or phonemes: and
for each given mouth-shape-of-interest of the set of one or more mouth-shapes-of-interest, correlating, using the one or more processors, the given mouth-shape-of-interest to one or more video frames of the plurality of video frames.

8. The method of any of claims 1 to 7, further comprising:
processing, using the one or more processors, a transcript of the video clip to identify one or more words or phonemes;
generating, using the one or more processors, a set of one or more mouth-shapes-of-interest based on the identified one or more words or phonemes: and
for each given mouth-shape-of-interest of the set of one or more mouth-shapes-of-interest, correlating, using the one or more processors, the given mouth-shape-of-interest to one or more video frames of the plurality of video frames.

9. The method of any of claims 1 to 8, further comprising:
processing, using the one or more processors, the synthesized audio clip to identify one or more words or phonemes being spoken in the synthesized speech of the synthesized audio clip;
generating, using the one or more processors, a set of one or more mouth-shapes-of-interest based on the identified one or more words or phonemes: and
for each given mouth-shape-of-interest of the set of one or more mouth-shapes-of-interest, correlating, using the one or more processors, the given mouth-shape-of-interest to one or more video frames of the plurality of video frames.

10. The method of any of claims 1 to 9, further comprising:
processing, using the one or more processors, the sequence of text to identify one or more words or phonemes;
generating, using the one or more processors, a set of one or more mouth-shapes-of-interest based on the identified one or more words or phonemes: and
for each given mouth-shape-of-interest of the set of one or more mouth-shapes-of-interest, correlating, using the one or more processors, the given mouth-shape-of-interest to one or more video frames of the plurality of video frames.

11. The method of claim 2 or claim 4, further comprising:
selecting the synthesized audio clip, using the one or more processors, based on the overall score satisfying a predetermined criteria;
combining, using the one or more processors, the synthesized audio clip with the video clip to generate a modified video; and
outputting, using the one or more processors, the modified video.

12. A system (100, 200) comprising:
a memory (106, 206); and
one or more processors (104, 204) coupled to the memory and configured to perform the operations of any one of claims 1 to 11.

13. A non-transitory computer readable medium comprising instructions which, when executed, cause one or more processors to perform the operations of any one of claims 1 to 11.

## Patentansprüche

1. Computerimplementiertes Verfahren (2000), umfassend:
Erzeugen (2004), unter Verwendung eines oder mehrerer Prozessoren (104) eines Verarbeitungssystems (102), eines synthetisierten Audioclips basierend auf einer Textsequenz unter Verwendung eines Text-zu-Sprache-Synthesizers (114), wobei der synthetisierte Audioclip synthetisierte Sprache umfasst, die der Textsequenz entspricht; und
für jedes gegebene Videoeinzelbild eines Videoclips, der eine Vielzahl von Videoeinzelbildern umfasst:
Verarbeiten des Videoclips, unter Verwendung des einen oder der mehreren Prozessoren, um ein gegebenes Bild (302) basierend auf dem gegebenen Videoeinzelbild zu erlangen (2006);
Verarbeiten (2008) des synthetisierten Audioclips, unter Verwendung des einen oder der mehreren Prozessoren, um ein gegebenes Segment von Audiodaten zu erlangen, das dem gegebenen Videoeinzelbild entspricht;
Verarbeiten (2010) des gegebenen Segments von Audiodaten, unter Verwendung des einen oder der mehreren Prozessoren, um ein gegebenes Audiospektrogramm-Bild (304) zu erzeugen; und
Erzeugen (2012), unter Verwendung des einen oder der mehreren Prozessoren, eines Sprach-Mund-Konsistenzwerts auf Einzelbildebene (316) für das gegebene Videoeinzelbild basierend auf dem gegebenen Bild und dem gegebenen Audiospektrogramm-Bild unter Verwendung eines Sprach-Mund-Konsistenzmodells (116, 306), wobei der Sprach-Mund-Konsistenzwert auf Einzelbildebene eine Angabe darüber ist, wie konsistent das gegebene Bild mit dem gegebenen Audiospektrogramm-Bild ist, und wobei der Sprach-Mund-Konsistenzwert auf Einzelbildebene verwendet wird zum: Erzeugen eines modifizierten Videos; Erzeugen einer Übersetzung; oder Erzeugen einer Sprachsynchronisation.

2. Verfahren nach Anspruch 1, ferner umfassend das Erzeugen, unter Verwendung des einen oder der mehreren Prozessoren, eines Gesamtwerts (1506, 1512, 1520, 1528) basierend zumindest teilweise auf dem erzeugten Sprach-Mund-Konsistenzwert auf Einzelbildebene, der jedem gegebenen Videoeinzelbild der Vielzahl von Videoeinzelbildern entspricht.

3. Verfahren nach Anspruch 1 oder 2, ferner umfassend:
Identifizieren, unter Verwendung des einen oder der mehreren Prozessoren, eines Satzes der erzeugten Sprach-Mund-Konsistenzwerte auf Einzelbildebene, die einem gegebenen Wort der Textsequenz entsprechen; und
Erzeugen, unter Verwendung des einen oder der mehreren Prozessoren, eines Sprach-Mund-Konsistenzwerts auf Wortebene (1402, 1404, 1406, 1408) für das gegebene Wort basierend auf dem identifizierten Satz der erzeugten Sprach-Mund-Konsistenzwerte auf Einzelbildebene.

4. Verfahren nach Anspruch 3, ferner umfassend das Erzeugen, unter Verwendung des einen oder der mehreren Prozessoren, eines Gesamtwerts basierend zumindest teilweise auf dem erzeugten Sprach-Mund-Konsistenzwert auf Wortebene, der jedem gegebenen Wort der Textsequenz entspricht.

5. Verfahren nach einem der Ansprüche 1 bis 4, ferner umfassend das Erzeugen, unter Verwendung des einen oder der mehreren Prozessoren, eines Dauerwerts basierend auf einem Vergleich einer Länge des synthetisierten Audioclips und einer Länge des Videoclips.

6. Verfahren nach einem der Ansprüche 1 bis 5, ferner umfassend: Verarbeiten, unter Verwendung des einen oder der mehreren Prozessoren, des Videoclips, um einen Satz von einer oder mehreren interessierenden Mundformen eines in dem Videoclip sichtbaren Sprechers zu identifizieren; und
für jede gegebene interessierende Mundform des Satzes von einer oder mehreren interessierenden Mundformen, Korrelieren, unter Verwendung des einen oder der mehreren Prozessoren, der gegebenen interessierenden Mundform mit einem oder mehreren Videoeinzelbildern der Vielzahl von Videoeinzelbildern.

7. Verfahren nach einem der Ansprüche 1 bis 6, wobei der Videoclip ferner ursprüngliche Audiodaten umfasst und das Verfahren ferner umfasst:
Verarbeiten, unter Verwendung des einen oder der mehreren Prozessoren, der ursprünglichen Audiodaten, um ein oder mehrere Wörter oder Phoneme zu identifizieren, die von einem in den ursprünglichen Audiodaten aufgezeichneten Sprecher gesprochen werden;
Erzeugen, unter Verwendung des einen oder der mehreren Prozessoren, eines Satzes von einer oder mehreren interessierenden Mundformen basierend auf dem identifizierten einen oder den mehreren Wörtern oder Phonemen; und
für jede gegebene interessierende Mundform des Satzes von einer oder mehreren interessierenden Mundformen, Korrelieren, unter Verwendung des einen oder der mehreren Prozessoren, der gegebenen interessierenden Mundform mit einem oder mehreren Videoeinzelbildern der Vielzahl von Videoeinzelbildern.

8. Verfahren nach einem der Ansprüche 1 bis 7, ferner umfassend:
Verarbeiten, unter Verwendung des einen oder der mehreren Prozessoren, eines Transkripts des Videoclips, um ein oder mehrere Wörter oder Phoneme zu identifizieren;
Erzeugen, unter Verwendung des einen oder der mehreren Prozessoren, eines Satzes von einer oder mehreren interessierenden Mundformen basierend auf dem identifizierten einen oder den mehreren Wörtern oder Phonemen; und
für jede gegebene interessierende Mundform des Satzes von einer oder mehreren interessierenden Mundformen, Korrelieren, unter Verwendung des einen oder der mehreren Prozessoren, der gegebenen interessierenden Mundform mit einem oder mehreren Videoeinzelbildern der Vielzahl von Videoeinzelbildern.

9. Verfahren nach einem der Ansprüche 1 bis 8, ferner umfassend:
Verarbeiten, unter Verwendung des einen oder der mehreren Prozessoren, des synthetisierten Audioclips, um ein oder mehrere Wörter oder Phoneme zu identifizieren, die in der synthetisierten Sprache des synthetisierten Audioclips gesprochen werden;
Erzeugen, unter Verwendung des einen oder der mehreren Prozessoren, eines Satzes von einer oder mehreren interessierenden Mundformen basierend auf dem identifizierten einen oder den mehreren Wörtern oder Phonemen; und
für jede gegebene interessierende Mundform des Satzes von einer oder mehreren interessierenden Mundformen, Korrelieren, unter Verwendung des einen oder der mehreren Prozessoren, der gegebenen interessierenden Mundform mit einem oder mehreren Videoeinzelbildern der Vielzahl von Videoeinzelbildern.

10. Verfahren nach einem der Ansprüche 1 bis 9, ferner umfassend:
Verarbeiten, unter Verwendung des einen oder der mehreren Prozessoren, der Textsequenz, um ein oder mehrere Wörter oder Phoneme zu identifizieren;
Erzeugen, unter Verwendung des einen oder der mehreren Prozessoren, eines Satzes von einer oder mehreren interessierenden Mundformen basierend auf dem identifizierten einen oder den mehreren Wörtern oder Phonemen; und
für jede gegebene interessierende Mundform des Satzes von einer oder mehreren interessierenden Mundformen, Korrelieren, unter Verwendung des einen oder der mehreren Prozessoren, der gegebenen interessierenden Mundform mit einem oder mehreren Videoeinzelbildern der Vielzahl von Videoeinzelbildern.

11. Verfahren nach Anspruch 2 oder Anspruch 4, ferner umfassend:
Auswählen des synthetisierten Audioclips, unter Verwendung des einen oder der mehreren Prozessoren, basierend darauf, dass der Gesamtwert ein vorbestimmtes Kriterium erfüllt;
Kombinieren, unter Verwendung des einen oder der mehreren Prozessoren, des synthetisierten Audioclips mit dem Videoclip, um ein modifiziertes Video zu erzeugen; und
Ausgeben, unter Verwendung des einen oder der mehreren Prozessoren, des modifizierten Videos.

12. System (100, 200), umfassend:
einen Speicher (106, 206); und
ein oder mehrere Prozessoren (104, 204), die mit dem Speicher gekoppelt und konfiguriert sind, die Operationen nach einem der Ansprüche 1 bis 11 durchzuführen.

13. Nicht-flüchtiges computerlesbares Medium, umfassend Anweisungen, die bei Ausführung ein oder mehrere Prozessoren veranlassen, die Operationen nach einem der Ansprüche 1 bis 11 durchzuführen.

## Revendications

1. Procédé mis en œuvre par ordinateur (2000) comprenant :
la génération (2004), à l'aide d'un ou plusieurs processeurs (104) d'un système de traitement (102), d'un clip audio synthétisé basé sur une séquence de texte à l'aide d'un synthétiseur vocal (114), le clip audio synthétisé comprenant une parole synthétisée correspondant à la séquence de texte ; et
pour chaque image vidéo donnée d'un clip vidéo comprenant une pluralité d'images vidéo :
le traitement du clip vidéo, à l'aide des un ou plusieurs processeurs, pour obtenir (2006) une image donnée (302) basée sur l'image vidéo donnée ;
le traitement (2008) du clip audio synthétisé, à l'aide des un ou plusieurs processeurs, pour obtenir un segment donné de données audio correspondant à l'image vidéo donnée ;
le traitement (2010) du segment donné de données audio, à l'aide des un ou plusieurs processeurs, pour générer une image de spectrogramme audio donnée (304) ; et
la génération (2012), à l'aide des un ou plusieurs processeurs, d'un score de cohérence parole-bouche au niveau de l'image (316) pour l'image vidéo donnée basé sur l'image donnée et l'image du spectrogramme audio donnée à l'aide d'un modèle de cohérence parole-bouche (116, 306), dans lequel le score de cohérence parole-bouche au niveau de l'image est une indication de la cohérence de l'image donnée avec l'image du spectrogramme audio donnée, et dans lequel le score de cohérence parole-bouche au niveau de l'image est utilisé pour : générer une vidéo modifiée ; générer une traduction ; ou générer un doublage de la voix.

2. Procédé selon la revendication 1, comprenant également la génération, à l'aide des un ou plusieurs processeurs, d'un score global (1506, 1512, 1520, 1528) basé au moins en partie sur le score de cohérence parole-bouche au niveau de l'image généré correspondant à chaque image vidéo donnée de la pluralité d'images vidéo.

3. Procédé selon la revendication 1 ou 2, comprenant également :
l'identification, à l'aide des un ou plusieurs processeurs, d'un ensemble de scores de cohérence parole-bouche au niveau de l'image générés correspondant à un mot donné de la séquence de texte ; et
la génération, à l'aide des un ou plusieurs processeurs, d'un score de cohérence parole-bouche au niveau du mot (1402, 1404, 1406, 1408) pour le mot donné sur la base de l'ensemble identifié des scores de cohérence parole-bouche au niveau de l'image générés.

4. Procédé selon la revendication 3, comprenant également la génération, à l'aide des un ou plusieurs processeurs, d'un score global basé au moins en partie sur le score de cohérence parole-bouche au niveau du mot généré correspondant à chaque mot donné de la séquence du texte.

5. Procédé selon l'une quelconque des revendications 1 à 4, comprenant également la génération, à l'aide des un ou plusieurs processeurs, d'un score de durée basé sur une comparaison d'une longueur du clip audio synthétisé et d'une longueur du clip vidéo.

6. Procédé selon l'une quelconque des revendications 1 à 5, comprenant également :
le traitement, à l'aide des un ou plusieurs processeurs, du clip vidéo pour identifier un ensemble d'une ou plusieurs formes de bouche d'intérêt provenant d'un locuteur visible dans le clip vidéo ; et
pour chaque forme de bouche d'intérêt donnée de l'ensemble d'une ou plusieurs formes de bouche d'intérêt, la corrélation, à l'aide des un ou plusieurs processeurs, de la forme de bouche d'intérêt donnée à une ou plusieurs images vidéo de la pluralité d'images vidéo.

7. Procédé selon l'une quelconque des revendications 1 à 6, dans lequel le clip vidéo comprend également des données audio originales, et le procédé comprend également :
le traitement, à l'aide des un ou plusieurs processeurs, des données audio originales pour identifier un ou plusieurs mots ou phonèmes étant prononcés par un locuteur enregistré dans les données audio originales ;
la génération, à l'aide des un ou plusieurs processeurs, d'un ensemble d'une ou plusieurs formes de bouche d'intérêt sur la base des un ou plusieurs mots ou phonèmes identifiés ; et
pour chaque forme de bouche d'intérêt donnée de l'ensemble d'une ou plusieurs formes de bouche d'intérêt, la corrélation, à l'aide des un ou plusieurs processeurs, de la forme de bouche d'intérêt donnée à une ou plusieurs images vidéo de la pluralité d'images vidéo.

8. Procédé selon l'une quelconque des revendications 1 à 7, comprenant également :
le traitement, à l'aide des un ou plusieurs processeurs, d'une transcription du clip vidéo pour identifier un ou plusieurs mots ou phonèmes ;
la génération, à l'aide des un ou plusieurs processeurs, d'un ensemble d'une ou plusieurs formes de bouche d'intérêt sur la base des un ou plusieurs mots ou phonèmes identifiés ; et
pour chaque forme de bouche d'intérêt donnée de l'ensemble d'une ou plusieurs formes de bouche d'intérêt, la corrélation, à l'aide des un ou plusieurs processeurs, de la forme de bouche d'intérêt donnée à une ou plusieurs images vidéo de la pluralité d'images vidéo.

9. Procédé selon l'une quelconque des revendications 1 à 8, comprenant également :
le traitement, à l'aide des un ou plusieurs processeurs, du clip audio synthétisé pour identifier un ou plusieurs mots ou
phonèmes prononcés dans le discours synthétisé du clip audio synthétisé ;
la génération, à l'aide des un ou plusieurs processeurs, d'un ensemble d'une ou plusieurs formes de bouche d'intérêt sur la base des un ou plusieurs mots ou phonèmes identifiés ; et
pour chaque forme de bouche d'intérêt donnée de l'ensemble d'une ou plusieurs formes de bouche d'intérêt, la corrélation, à l'aide des un ou plusieurs processeurs, de la forme de bouche d'intérêt donnée à une ou plusieurs images vidéo de la pluralité d'images vidéo.

10. Procédé selon l'une quelconque des revendications 1 à 9, comprenant également :
le traitement, à l'aide des un ou plusieurs processeurs, d'une séquence de texte pour identifier un ou plusieurs mots ou phonèmes ;
la génération, à l'aide des un ou plusieurs processeurs, d'un ensemble d'une ou plusieurs formes de bouche d'intérêt sur la base des un ou plusieurs mots ou phonèmes identifiés ; et
pour chaque forme de bouche d'intérêt donnée de l'ensemble d'une ou plusieurs formes de bouche d'intérêt, la corrélation, à l'aide des un ou plusieurs processeurs, de la forme de bouche d'intérêt donnée à une ou plusieurs images vidéo de la pluralité d'images vidéo.

11. Procédé selon la revendication 2 ou la revendication 4, comprenant également :
la sélection du clip audio synthétisé, à l'aide des un ou plusieurs processeurs, sur la base du score global satisfaisant à un critère prédéterminé ;
la combinaison, à l'aide des un ou plusieurs processeurs, du clip audio synthétisé avec le clip vidéo pour générer une vidéo modifiée ; et
l'émission, à l'aide des un ou plusieurs processeurs, d'une vidéo modifiée.

12. Système (100, 200) comprenant :
une mémoire (106, 206) ; et
un ou plusieurs processeurs (104, 204) couplés à la mémoire et configurés pour réaliser les opérations selon l'une quelconque des revendications 1 à 11.

13. Support non transitoire lisible par ordinateur comprenant des instructions qui, lorsqu'elles sont exécutées, amènent les un ou plusieurs processeurs à réaliser les opérations selon l'une quelconque des revendications 1 à 11.
